(19) Europäisches Patentamt
European Patent Office
Office européen des brevets

(11) **EP 3 259 039 B1**

(12) **EUROPÄISCHE PATENTSCHRIFT**

(45) Veröffentlichungstag und Bekanntmachung des Hinweises auf die Patenterteilung:
**11.08.2021** **Patentblatt 2021/32**

(21) Anmeldenummer: **16735581.7**

(22) Anmeldetag: **22.02.2016**

(51) Int Cl.:
*A63G 31/16* (2006.01)    *G09B 9/12* (2006.01)

(86) Internationale Anmeldenummer:
**PCT/EP2016/053655**

(87) Internationale Veröffentlichungsnummer:
**WO 2016/131986 (25.08.2016 Gazette 2016/34)**

(54) **VERFAHREN UND VORRICHTUNG ZUR ANSTEUERUNG EINES SIMULATORS**

METHOD AND DEVICE FOR CONTROLLING A SIMULATOR

PROCÉDÉ ET DISPOSITIF POUR LA COMMANDE D'UN SIMULATEUR

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **20.02.2015  DE 102015102459**

(43) Veröffentlichungstag der Anmeldung:
**27.12.2017   Patentblatt 2017/52**

(73) Patentinhaber: **Deutsches Zentrum für Luft- und Raumfahrt e.V.**
**51147 Köln (DE)**

(72) Erfinder: **SEEHOF, Carsten**
**38110 Braunschweig (DE)**

(74) Vertreter: **Gramm, Lins & Partner**
**Patent- und Rechtsanwälte PartGmbB**
**Freundallee 13a**
**30173 Hannover (DE)**

(56) Entgegenhaltungen:
**WO-A1-2007/042290     DE-A1-102011 103 736**

**Beschreibung**

Die Erfindung betrifft ein Verfahren zum Ansteuern eines Simulators zur Simulation von translatorischen und rotatorischen Bewegungen eines Fahrzeuges. Die Erfindung betrifft ebenso einen Simulator sowie ein Computerprogramm hierzu.

Mit Hilfe von Simulatoren lassen sich Bewegungen eines Fahrzeuges in der realen Welt simulieren, so dass der Fahrer des Fahrzeuges das Gefühl vermittelt bekommt, als ob er ein Fahrzeug tatsächlich durch die reale Welt steuern würde. So sind beispielsweise Fahrzeugsimulatoren aus dem Stand der Technik bekannt, bei denen im Sichtfeld des Fahrers eine Bildprojektionseinrichtung angeordnet ist, welche dem Fahrer ein Bild der äußeren Umgebung des Fahrzeuges anzeigt. Führt der Fahrer des Fahrzeugsimulators nun Steuerungsaufgaben durch, wie beispielsweise Beschleunigen, Abbremsen oder Lenkeingaben, so wird je nach Steuereingaben das auf der Bildprojektionseinrichtung angezeigte Umgebungsbild eine Steuereingabe entsprechend angepasst und verändert.

In den feststehenden Simulatoren, bei denen beispielsweise nur durch das dargestellte Außenbild und dessen Veränderung eine Simulation der Veränderung und/oder Beschleunigung des Fahrzeuges simuliert werden, sind auch Simulatoren bekannt, die zusätzlich hierzu ein Bewegungssystem aufweisen, welches zum Simulieren der auftretenden Bewegungen und Beschleunigungen innerhalb der Simulation in einem definierten Bewegungsraum eingerichtet sind. Dabei lassen sie sich innerhalb des Bewegungsraumes je nach Simulatortyp bis sechs Freiheitsgrade durch das Bewegungssystem abbilden, nämlich zum einen drei rotatorische und zum anderen drei translatorische Bewegungen in Bezug auf die drei Fahrzeugachsen. Insbesondere bei der Simulation von Luftfahrzeugen werden Bewegungssysteme für den Simulator verwendet, die eine Abbildung der Bewegung des Luftfahrzeuges in alle sechs Freiheitsgrade innerhalb des Bewegungsraumes ermöglichen, wie beispielsweise eine Hexapod-Plattform.

Bei den drei Fahrzeugachsen handelt es sich um die Längsachse (x), die Querachse (y) sowie die Hochachse (z).

Der klassische Simulationsansatz sieht vor, dass die durch die Modellierung des Fahrzeuges in der Simulation gewonnenen Bewegungs- und/oder Beschleunigungswerte in den Bewegungsraum des Bewegungssystems abgebildet werden, wobei die hochfrequenten Anteile der Translationsbeschleunigungen sowie die hochfrequenten Anteile der Rotationsgeschwindigkeiten direkt in den entsprechenden Freiheitsgraden nachvollzogen werden. Die niederfrequenten Anteile der Translationsbeschleunigungen werden dagegen durch das Kippen der Bewegungsplattform gegenüber dem Erdlot dargestellt, wodurch sich der Scheingewichtsvektor in der Kabine dreht. Die übrigen, dem Benutzer zur Verfügung stehenden, Lagedarstellungen wie Außenansicht oder Instrumente beschreiben weiterhin die ursprüngliche Lage, so dass der Eindruck einer langanhaltenden, translatorischen Beschleunigung entsteht.

Allerdings muss für eine richtige Darstellung der niederfrequenten translatorischen Beschleunigung durch das Kippen der Bewegungsplattform gegenüber dem Erdlot sichergestellt werden, dass die Drehung bzw. Neigung der Simulatorplattform unterhalb der Wahrnehmungsschwelle erfolgt, so dass von dem Fahrzeugführer in dem Simulator nur die Änderung des Scheingewichtsvektors wahrgenommen wird und nicht die Drehung der Simulatorkabine selber. Andernfalls entsteht ein Simulationsfehler bei der kognitiven Verarbeitung durch den Fahrzeugführer, der unangenehm und im schlechtesten Fall zu der sogenannten Simulatorkrankheit führen kann.

Nach dem derzeitigen Stand der Technik werden die vom Simulationsmodell bereitgestellten Beschleunigungssignale mittels Filteralgorithmen in Aktuator-Sollzustände der Aktuatoren des Bewegungssystems gewandelt. Diese werden durch die Aktuatoren und deren Ansteuerung in mechanische Bewegungen umgesetzt. Häufig wird hierbei der klassische Wash-Out-Filter-Algorithmus (CWA: Classic-Washout-Algorithm) verwendet und ist der bei Weitem am häufigsten in der Fahrzeugsimulation angewandte Filter.

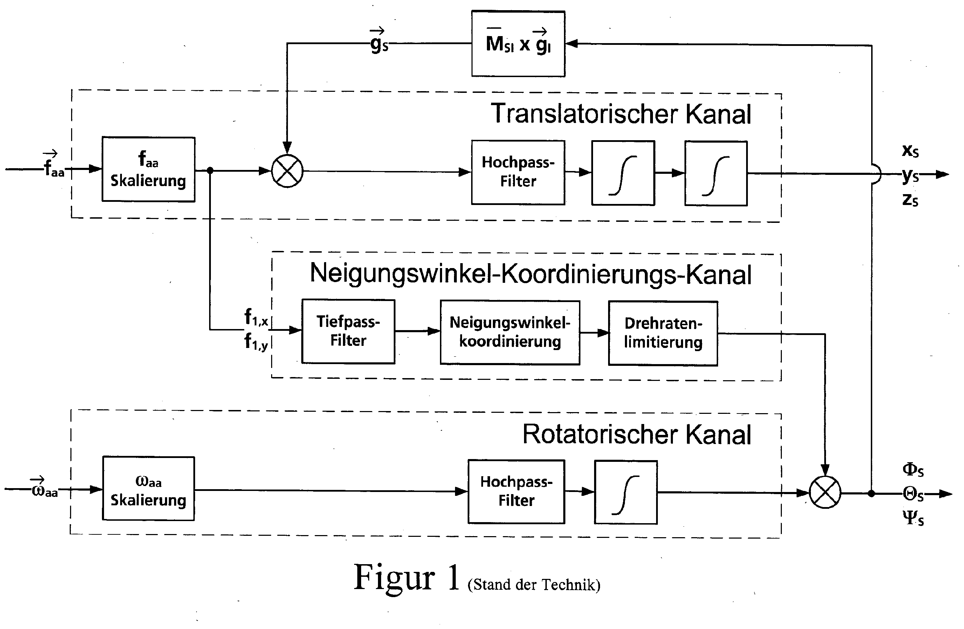

Figur 1 zeigt schematisch den Aufbau eines klassischen Wash-Out-Filters, wie er aus dem Stand der Technik bekannt ist. Die spezifischen Kräfte, die sich aus dem Simulationsmodell bei der Simulation des Fahrzeuges ergeben, werden im translatorischen Kanal mittels eines Hochpassfilters in translatorische Beschleunigungen, Geschwindigkeiten und Positionen gewandelt. Die hochfrequenten Anteile des Eingangssignals werden somit richtig dargestellt, da die hochfrequenten Anteile der zu simulierenden translatorischen Beschleunigung direkt in eine translatorische Beschleunigung des Bewegungssystems des Simulators umgesetzt werden. Begrenzender Faktor hierbei ist der zur Verfügung stehende Bewegungsraum, bis zu dessen Grenze die translatorische Bewegung der Simulatorkabine beendet und die rückführende Bewegung zur Ausgangsposition eingeleitet sein muss.

Mit Hilfe einer Kombination aus einem Tiefpassfilter und einem Tilt-Koordination-Modul werden die spezifischen Kräfte im Tilt-Koordination-Kanal in Lagewinkel gewandelt. Hierdurch können langanhaltende translatorische Beschleunigungen unter der Voraussetzung dargestellt werden, dass alle weiteren Lageinformationen wie Außensicht, Instrumente etc. weiterhin die ursprüngliche Lage darstellen. Die Grenze für dieses Verfahren liegt in der Wahrnehmungsschwelle für die rotatorische Bewegung. Deren Einhaltung wird durch eine Drehratenlimitierung sichergestellt. Die Wahrnehmungsschwelle darf nicht überschritten werden, da andernfalls sich widersprechende Wahrnehmungen zu Übelkeit führen, welche sich bis hin zu einer Simulatorkrankheit verschlimmern können. Somit können sowohl sehr hoch- wie auch sehr niederfrequente translatorische Beschleunigungskräfte richtig dargestellt werden. In einem mittleren Frequenzbereich ist dagegen immer ein Kompromiss für die jeweilige Aufgabe zu suchen.

In dem rotatorischen Kanal werden die eingehenden Drehraten analog zum translatorischen Kanal mittels Hochpassfilter so gewandelt, dass die hochfrequenten Drehratenanteile richtig dargestellt werden. Gleichzeitig soll die Verletzung der Bewegungsraumgrenze verhindert werden. Die als Ausgänge des Tilt-Koordination-Kanals und des rotatorischen Kanals resultierenden Lagewinkel der Simulatorkabinen werden in den translatorischen Kanal zurückgeführt, um beispielsweise Flugzustände wie den koordinierten Kurvenflug richtig darstellen zu können. Dieser zeichnet sich im realen Luftfahrzeug durch Drehraten um die Längsachse aus, ohne dass hierbei Querkräfte zu spüren sind. Der Wash-Out-Filter reagiert somit während des Einleitens im rotatorischen Kanal mit einem Drehwinkel, während im translatorischen Kanal kein geändertes Eingangssignal anliegt. Dies würde ohne Rückführung zu einer Querkraft in der Simulatorkabine als Folge des Drehwinkels führen. Die Rückführung sorgt dafür, dass diese Seitenkraft durch eine Ausgleichsbewegung in Querrichtung minimiert wird.

Je nach eingestellten Parametern lässt sich der Wash-Out-Filter zwar an verschiedene Flugzustände anpassen, kann jedoch insbesondere aufgrund des Kompromisses im mittelfrequenten Beschleunigungsanteil auftretende Simulatorfehler nur mittelmäßig minimieren. Dies bedeutet, dass der Wash-Out-Filter im Vorfeld auf etwaige zu erwartende Flugzustände angepasst wird und somit für andere Flugzustände nur ein mittelmäßiges Ergebnis liefert.

Aus der DE 10 2011 103 736 A1 ist ein Verfahren zum Ansteuern eines Bewegungssystems eines zum Simulieren von Bewegungs- und/oder Beschleunigungswerten vorgesehenen Simulators bekannt, wobei zumindest ein zu simulierender Beschleunigungswert durch eine Neigung des Bewegungssystems gegenüber dem Erdlot simuliert wird und ein zusätzlicher translatorischer Bewegungsverlauf des Bewegungssystems ermittelt wird, um einen Simulatorfehler bis zum Anfahren des Lagewinkels auszugleichen. Diese Ansteuerung erfolgt dabei in Abhängigkeit von einem Neigungsverlauf und dem zusätzlichen translatorischen Bewegungsverlauf, wobei hierbei grundsätzlich eine Regelung und somit eine Rückführung des Bewegungssystemzustandes möglich ist.

Die WO 2007/042290 A1 betrifft ein Verfahren zur Steuerung der Bewegungen eines Flugsimulators und offenbart im Kern die Anwendung eines "feed-forward of a correction angle". Nachteil hierbei ist, dass auch dieser Filter an die verschiedenen Flugzustände entsprechend angepasst werden muss, um einen Simulationsfehlerje nach Flugzustand zu vermeiden.

Es ist daher Aufgabe der vorliegenden Erfindung einen verbesserten Filteralgorithmus zur Ansteuerung eines Simulators zur Simulation von translatorischen und rotatorischen Beschleunigungswerten anzugeben, der die aus dem Stand der Technik bekannten Nachteile insbesondere eines Classic-Wash-Out-Filters vermeidet.

Die Aufgabe wird mit dem Verfahren gemäß Anspruch 1, dem Simulator gemäß Anspruch 7 sowie im Computerprogramm gemäß Anspruch 9 erfindungsgemäß gelöst.

Erfindungsgemäß ist demnach ein Verfahren zum Ansteuern eines Simulators zur Simulation von translatorischen und rotatorischen Bewegungen eines Fahrzeuges vorgesehen, wobei in Bezug auf die drei Fahrzeugachsen eine Drehrate um eine erste Fahrzeugachse und die jeweils in einer zweiten und dritten Fahrzeugachse wirkenden spezifischen Kräfte aus einem das Fahrzeug simulierenden Bewegungsmodell bereitgestellt und in translatorische und rotatorische Steuerbefehle zur Ansteuerung des Simulators umgewandelt werden.

Anders als bei dem aus dem Stand der Technik bekannten Wash-Out-Filter wird bei der vorliegenden Erfindung auf Basis der Differenz des Scheinlotes in der Simulatorkabine von dem im simulierten Luftfahrzeug vorhandenen Scheinlot das Bewegungssystem des Simulators angesteuert.

Zunächst wird aus der Drehrate um die erste Fahrzeugachse, die von dem das Fahrzeug simulierenden Bewegungsmodell bereitgestellt wird, ein Drehwinkel berechnet. Dies kann beispielsweise mittels Integration über die Zeit erfolgen, woraus sich aus der Drehrate zu einem aktuellen Zeitschritt der Drehwinkel berechnen lässt.

Des Weiteren wird ein Scheinlotwinkel zwischen der Hochachse als dritte Fahrzeugachse und dem aus den Kräften ableitbaren Scheinlot berechnet, wobei sich das Scheinlot aus den bereitgestellten spezifischen Kräften in der zweiten und dritten Fahrzeugachse berechnen lässt. Damit wird der Scheinlotwinkel in der durch die zweite und dritte Fahrzeugachse aufgespannten Ebene zwischen der Hochachse als dritte Fahrzeugachse und dem aus den Kräften in der zweiten und dritten Fahrzeugachse resultierenden Scheinlot berechnet.

Anschließend wird aus dem Drehwinkel und dem Scheinlotwinkel eine Scheinlotwinkeldifferenz berechnet, die angibt, dass eine Umsetzung der zu simulierenden spezifischen Kräfte und der Drehrate im Simulator zu einem Wahrnehmungsfehler führen würde. Mit der Scheinlotwinkeldifferenz kann dabei der entstehende Wahrnehmungsfehler quantifiziert werden, wodurch er sich durch weitere Filterung minimieren lässt.

Aus der Scheinlotwinkeldifferenz wird nun ein hochfrequenter Differenzanteil der Scheinlotwinkeldifferenz ermittelt, der durch eine translatorische Bewegung des Simulators ausgeglichen werden soll. Dies kann beispielsweise dadurch erreicht werden, dass die Scheinlotwinkeldifferenz durch einen Hochpassfilter gefiltert wird, beispielsweise ein Hochpassfilter zweiter oder dritter Ordnung, um so den hochfrequenten Differenzanteil der Scheinlotwinkeldifferenz zu bestimmen. Dieser hochfrequente Differenzanteil, der bei Umsetzung mittels Drehung der Simulatorkabine ggf. oberhalb der Wahrnehmungsschwelle liegt und eine spürbare Kraft in der Simulatorkabine nach sich zieht, welche durch eine translatorische Bewegung des Simulators ausgeglichen werden soll, wird nunmehr verwendet, um in Abhängigkeit hiervon die translatorischen Steuerbefehle zur Ansteuerung des Simulators für eine translatorische Bewegung des Simulators in der zweiten Fahrzeugachse zu berechnen. In einem einfachen Fall kann dies beispielsweise aus der Summe von Erdbeschleunigung (g) und dem Sinus des hochfrequenten Differenzanteils der Scheinlotwinkeldifferenz bestimmt werden, wodurch sich eine translatorische Bewegung in der zweiten Fahrzeugachse des Simulators ergibt.

Zur Ansteuerung der rotatorischen Freiheitsgrade des Simulators wird nun basierend auf dem zuvor berechneten Drehwinkel, dem hochfrequenten Differenzanteil der Scheinlotwinkeldifferenz und dem Scheinlotwinkel selber ein Ausgleichswinkel berechnet, der einem zu simulierenden Beschleunigungswert in der zweiten Fahrzeugachse durch Neigung des Simulators gegenüber dem Erdlot entspricht. Dieser Ausgleichswinkel kann beispielsweise auch 0 sein, wenn es keinen zu simulierenden Beschleunigungswert gibt, der durch Neigung des Simulators gegenüber dem Erdlot simuliert werden könnte, was beispielsweise bei einem koordinierten Kurvenflug der Fall ist.

Mit anderen Worten, solange die Drehraten im Luftfahrzeug und im Simulator gleich hoch sind, gibt es keine Fehler und eine Begrenzung ist nicht notwendig. In diesem Falle ist der Ausgleichswinkel 0. Erst wenn die Drehraten unterschiedlich sind, bedarf es einer Limitierung. Der Ausgleichswinkel ist dann größer 0.

Ist der Ausgleichswinkel größer 0, so wird der Ausgleichswinkel mittels einer physiologischen Drehratenlimitierung limitiert, wobei die Drehratenlimitierung eine Neigung des Simulators bzw. Drehung des Simulators, soweit gewünscht, unterhalb der Wahrnehmungsschwelle begrenzt, so dass aus dem berechneten Ausgleichswinkel ein limitierter Ausgleichswinkel abgeleitet wird.

Anschließend werden die rotatorischen Steuerbefehle zur Ansteuerung des Simulators für eine rotatorische Bewegung des Simulators um die erste Fahrzeugachse durch Zusammenführung des limitierten Ausgleichswinkels und dem zuvor berechneten Drehwinkel berechnet. Beispielsweise ergibt sich aus der Berechnung der rotatorischen Steuerbefehle dann in dem aktuellen Zeitschritt ein Drehwinkel um die erste Fahrzeugachse, die der Simulator dann ansteuern soll.

Mit Hilfe der vorliegenden Erfindung wird es möglich, dass die Eingangsgrößen exakt oder richtungsrichtig nachgefahren werden können, wo dies systembedingt möglich ist. Die Bestimmung der Lagewinkel und der Sollposition der Simulatorkabine erfolgt dabei über die Scheinlotwinkel des zu simulierenden Luftfahrzeuges, wobei lediglich das Lastvielfache in der Hochachse systembedingt nicht richtig dargestellt werden kann. Gegenüber dem Stand der Technik bietet das erfindungsgemäße Verfahren den Vorteil, dass der beim Stand der Technik systembedingt nicht für alle Fälle optimierbare Restfehler identifiziert "Kurve am Boden") und bestmöglich verarbeitet werden kann, ohne dass bei den systembedingt optimal genutzten Signalen Nachteile entstehen. Da das vorliegende Verfahren eine exakte Bewegungsgleichung nutzt, lässt sich der Filter für Längs- und Seitenbewegungen verwenden.

Ein weiterer Vorteil besteht darin, dass aufgrund der gleichen Eingangssignale in den Filter das vorliegende Verfahren sofort in einem Großteil der im Betrieb befindlichen Simulatoren eingesetzt werden kann.

Um den hochfrequenten Differenzanteil der Scheinlotwinkeldifferenz zu ermitteln, ist es vorteilhaft, diesen mittels eines Hochpassfilters zu berechnen. Mittels eines Hochpassfilters werden Frequenzen oberhalb einer Grenzfrequenz annähernd ungeschwächt durchgeleitet, während tiefere Frequenzen gedämpft oder blockiert werden. Mit dem hochfrequenten Differenzanteil der Scheinlotwinkeldifferenz steht am Ausgang des Hochpassfilters somit derjenige Anteil der Scheinlotwinkeldifferenz an, der mittels einer translatorischen Bewegung des Simulators kompensiert werden kann. Somit lässt sich zunächst ein Teil des falschen Wahrnehmungseindruckes, der aufgrund der Scheinlotwinkeldifferenz entstehen würde, mittels der translatorischen Bewegung des Simulators kompensieren.

Die translatorischen Steuerbefehle für eine translatorische Bewegung des Simulators in der zweiten Fahrzeugachse lassen sich dann vorteilhafterweise aus dem Produkt der Erdbeschleunigung und dem Sinus des ermittelten hochfrequenten Drehwinkelanteils der Scheinlotwinkeldifferenz berechnen. Das Ergebnis ist eine translatorische Bewegung in der zweiten Fahrzeugachse im fahrzeugfesten Koordinatensystem als translatorischer Steuerbefehl, der dann in die Steuerlogik des Simulators zur Ansteuerung der Aktuatorlängen eingegeben werden kann.

Zur Berechnung des Ausgleichswinkels, mit dem insbesondere die niederfrequenten Beschleunigungswerte in der zweiten Fahrzeugachse durch Neigung des Simulators gegenüber dem Erdlot abgebildet werden sollen, ist es vorteilhaft, wenn dieser durch die Summe des Drehwinkels und des hochfrequenten Differenzanteils der Scheinlotdifferenz abzüglich des Scheinlotwinkels berechnet wird. Der Ausgleichswinkel findet dann Eingang in eine physiologische Drehratenlimitierung, mit der der Ausgleichswinkel auf einen limitierten Ausgleichswinkel im aktuellen Zeitschritt begrenzt wird, um so die Neigung des Simulators unterhalb der Wahrnehmungsschwelle zu begrenzen.

Dies könnte äquivalent auch mittels eines Tiefpassfilters realisiert werden, der als Eingang den Scheinlotwinkel erhält und komplementär zu dem Hochpassfilter ist. Aus der Summe des limitierten Ausgleichswinkels sowie des aktuellen Drehwinkels werden dann die rotatorischen Steuerbefehle für eine rotatorische Bewegung des Simulators um die erste Fahrzeugachse berechnet. Das Ergebnis kann beispielsweise ein anzufahrender Drehwinkel sein, der von dem Simulator im aktuellen Zeitschritt angefahren werden soll.

In einer vorteilhaften Ausführungsform wird der limitierte Ausgleichswinkel mittels der physiologischen Drehratenlimitierung in Abhängigkeit von dem Ausgleichswinkel einerseits und der aus dem Bewegungsmodell bereitgestellten Drehrate andererseits berechnet. Mit der physiologischen Drehratenlimitierung wird der anzufahrende Ausgleichswinkel zur Simulation von Beschleunigungswerten durch Neigung des Simulators im aktuellen Zeitschritt auf einen Winkel begrenzt, der beim Anfahren dieses Winkels im aktuellen Zeitschritt unterhalb der Wahrnehmungsschwelle des Menschen liegt. Das Anfahren des limitierten Ausgleichswinkels führt somit zu einer Neigung des Simulators, die die Insassen des Simulators nicht als Drehung um die Fahrzeugachse wahrnehmen, sondern lediglich den sich ändernden Gewichtskraftvektor als translatorische Beschleunigung.

Um somit auch bei großen Drehraten ein optimales Ergebnis zu erzielen und zu verhindern, dass die Drehratenlimitierung nicht mehr synchron zu den zu simulierenden Kräften arbeitet, wird ein Begrenzungswert, mit dem der Ausgleichswinkel im aktuellen Zeitschritt limitiert wird, in Abhängigkeit von einem vorgegeben minimalen Begrenzungswert und einem hochfrequenten Drehanteil der Drehrate ermittelt. Im Falle von großen Drehraten werden somit die Drehraten begrenzt und für eine gewisse Zeit nach dem Ereignis heraufgesetzt, so dass der Simulator, auch unter einer möglichen Inkaufnahme eines Simulationsfehlers, die großen Drehraten möglichst rasch umsetzt.

Eine Drehratenlimitierung ist grundsätzlich dann nicht gewünscht, wenn die Drehraten von Luftfahrzeug und Simulatorkabine gleich groß sind. In diesem Fall würde eine Drehung auch im Luftfahrzeug spürbar sein. Bei einem koordinierten Kurvenflug kann aus den oben genannten Gründen diese Drehung nicht langanhaltend nachgefahren werden ohne eine resultierende, vom Luftfahrzeug abweichende Kraft aufzubauen, so dass der Drehwinkel in der Folge zurückgeführt werden muss, bevor infolge der translatorischen Ausgleichsbeschleunigung die Simulatorkabine an die Bewegungsraumgrenzen stößt. Somit weichen bei dem zweiten Teil des Manövers die Drehraten von Luftfahrzeug und Simulatorkabine voneinander ab, was ein Einreifen der Drehratenlimitierung notwendig macht.

Gemäß Anspruch 7 ist ein Simulator zur Simulation von translatorischen rotatorischen Bewegungen eines Fahrzeuges vorgesehen, wobei eine Steuereinheit vorhanden ist, die zur Durchführung des vorstehend genannten Verfahrens zur Ansteuerung des Simulators eingerichtet ist. Der Simulator kann vorteilhafterweise ein Hexapod, oder auch Stewart-Gough-Plattform genannt, sein.

Die Erfindung wird anhand der beigefügten Figuren beispielhaft erläutert. Es zeigen:

Figur 1        - Prinzipielle Darstellung des klassischen Wash-Out-Filter-Algorithmus (Stand der Technik);
Figur 2        - Prinzipielle Darstellung des erfindungsgemäßen Scheinlotfilters für eine Seitenbewegung;
Figur 3        - Prinzipieller Aufbau der physiologischen Drehraten-Limitierung für eine Seitenbewegung;
Figur 4        - Schematische Darstellung des Scheinlotes im Geradeausflug mit konstantem Rollwinkel (hängende Fläche);
Figur 5a bis 5d  - Darstellung verschiedener Signalverläufe für den Flugzustand der hängenden Fläche;
Figur 6        - Schematische Darstellung des Scheinlotes während einer Kurve am Boden;
Figur 7a bis 7d  - Signalverläufe des Flugzustandes der Kurve am Boden;

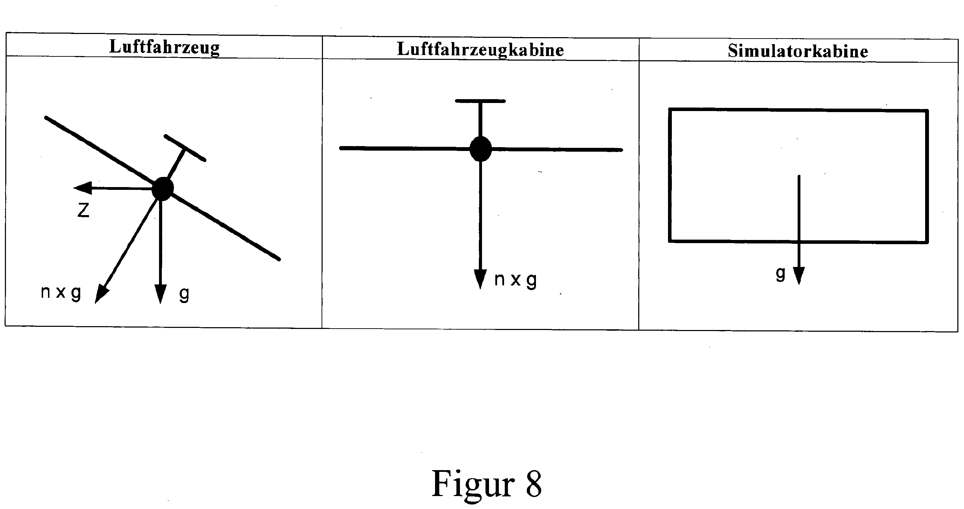

Figur 8        - Schematische Darstellung des Scheinlotes während einer koordinierten Kurve im Flug;
Figur 9a bis 9d  - Schematische Darstellung der Signalverläufe des Flugzustandes der koordinierten Kurve.

Figur 1 zeigt den prinzipiellen Aufbau eines klassischen Wash-Out-Algorithmus, wie aus dem Stand der Technik bekannt ist. Hierbei werden hochfrequente translatorische Beschleunigungen direkt in eine translatorische Bewegung des Simulators umgewandelt, während niederfrequente translatorische Beschleunigungswerte über eine Neigung der Simulatorkabine abgebildet werden (Tilt-Koordination-Kanal).

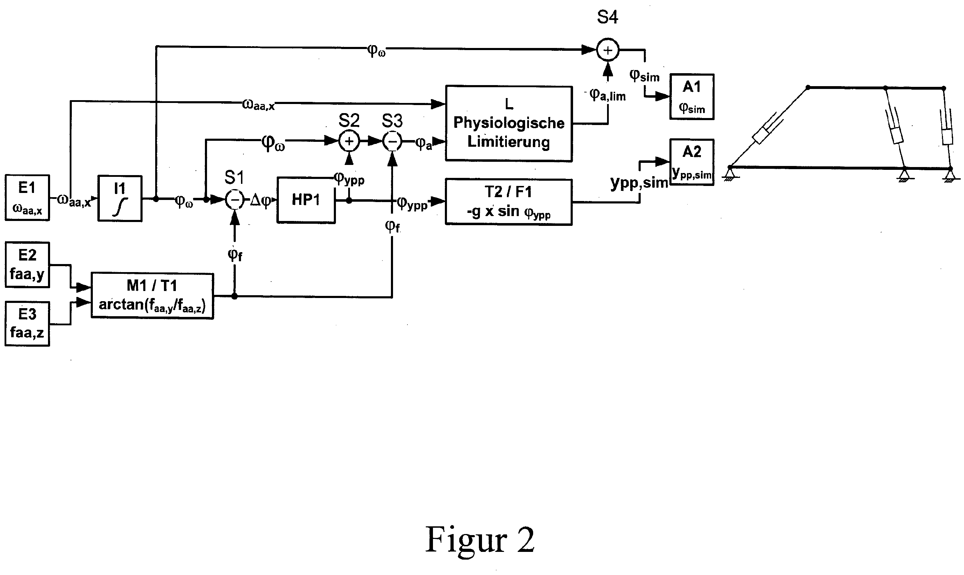

Figur 2 zeigt die prinzipielle Darstellung des erfindungsgemäßen Scheinlotfilters für eine Seitenbewegung. Die Eingangsgrößen in den Scheinlotfilter, in allgemeiner Form, sind die spezifischen Kräfte

$$\vec{f}_{aa} = \vec{a}_{aa} - \vec{g}_{PA} = \begin{pmatrix} f_{aa,x} \\ f_{aa,y} \\ f_{aa,z} \end{pmatrix} \tag{1}$$

Sowie die Drehbeschleunigungen

$$\vec{\dot{\omega}}_{aa} = \begin{pmatrix} \dot{\omega}_{aa,x} \\ \dot{\omega}_{aa,y} \\ \dot{\omega}_{aa,z} \end{pmatrix} \tag{2}$$

oder alternativ die Drehgeschwindigkeiten

$$\vec{\omega}_{aa} = \begin{pmatrix} \omega_{aa,x} \\ \omega_{aa,y} \\ \omega_{aa,z} \end{pmatrix} \tag{3}$$

des simulierten Luftfahrzeuges.

Im Luftfahrzeug setzt sich der Scheinlotwinkel aus dem Anteil in Folge von Zusatzkräften und dem Anteil in Folge einer Winkellage

$$\vec{\varphi}_{PA} = \begin{pmatrix} \vartheta_x \\ \varphi_y \end{pmatrix}_{PA} = \vec{\varphi}_{t,PA} + \vec{\varphi}_{\omega,PA} \tag{4}$$

zusammen.

Die Scheinlotwinkel ergeben sich in den einzelnen Drehachsen über

$$\begin{pmatrix} tan(\vartheta_x) \\ tan(\varphi_y) \end{pmatrix}_{PA} = \begin{pmatrix} \frac{f_{aa,x}}{f_{aa,z}} \\ \frac{f_{aa,y}}{f_{aa,z}} \end{pmatrix}_{PA} \tag{5}$$

zu

$$\vec{\varphi}_{PA} = \begin{pmatrix} \vartheta_x \\ \varphi_y \end{pmatrix}_{PA} = \begin{pmatrix} arctan\left(\frac{f_{aa,x}}{f_{aa,z}}\right) \\ arctan\left(\frac{f_{aa,y}}{f_{aa,z}}\right) \end{pmatrix}_{PA} \tag{6}$$

Der erste Term aus Formel 4 ergibt sich aus der translatorischen Beschleunigung des Luftfahrzeuges. Diese Werte stehen bei Übergabe der spezifischen Kräfte nicht explizit zur Verfügung. Durch Umformung von Formel 4 zu

$$\vec{\varphi}_{t,PA} = \vec{\varphi}_{PA} - \vec{\varphi}_{\omega,PA} \tag{7}$$

sind sie jedoch ermittelbar und mit Hilfe des Gesamtwinkels

$$\vec{\varphi}_{PA} = \int \vec{\omega}_{aa} \tag{8}$$

zu bestimmen. Der zweite Anteil ergibt sich aus der Winkellage des Luftfahrzeuges und der Erdbeschleunigung

$$\vec{f}_{\omega,PA} = \begin{pmatrix} f_x \\ f_y \\ f_z \end{pmatrix}_{\omega,PA} = \begin{pmatrix} sin(\theta_{PA}) \\ -sin(\phi_{PA}) \cdot cos(\theta_{PA}) \\ -cos(\phi_{PA}) \cdot cos(\theta_{PA}) \end{pmatrix} \cdot g \tag{9}$$

woraus die Scheinlotwinkel

$$\vec{\varphi}_{\omega,PA} = \begin{pmatrix} \vartheta \\ \varphi \end{pmatrix}_{\omega,PA} = \begin{pmatrix} arctan\left(\frac{f_x}{f_z}\right) \\ arctan\left(\frac{f_y}{f_z}\right) \end{pmatrix}_{\omega,PA} \tag{10}$$

ermittelbar sind. Damit stehen die beiden Eingangsgrößen vollständig zur Verfügung.

Äquivalent dazu können die oben genannten Gleichungen auch für die Simulatorkabine aufgestellt werden, um die Differenz zum Scheinlot des Luftfahrzeuges sowie die auf den Piloten wirkenden Kräfte zu bestimmen.

$$\vec{\varphi}_{PS} = \begin{pmatrix} \vartheta_x \\ \varphi_y \end{pmatrix}_{PS} = \vec{\varphi}_{t,PS} + \vec{\varphi}_{\omega,PS} \tag{11}$$

Für die Simulatoren sind beide Terme verfügbar. Daraus ergeben sich die spezifischen Kräfte in Folgedrehung der Simulatorkabine zu

$$\vec{f}_{\omega,PS} = \begin{pmatrix} f_x \\ f_y \\ f_z \end{pmatrix}_{\omega,PS} = \begin{pmatrix} sin(\theta_{PS}) \\ -sin(\phi_{PS}) \cdot cos(\theta_{PS}) \\ -cos(\phi_{PS}) \cdot cos(\theta_{PS}) \end{pmatrix} \cdot g \tag{12}$$

woraus die Scheinlotwinkel in Folgedrehung der Simulatorkabine

$$\vec{\varphi}_{\omega,PS} = \begin{pmatrix} \vartheta \\ \varphi \end{pmatrix}_{\omega,PS} = \begin{pmatrix} arctan\left(\frac{f_{PS,x}}{f_{PS,z}}\right) \\ arctan\left(\frac{f_{PS,y}}{f_{PS,z}}\right) \end{pmatrix}_{\omega} \tag{13}$$

bestimmt werden können. Für die translatorische Beschleunigung gilt im kabinenfesten Koordinatensystem

$$\vec{f}_{t,PS} = \begin{pmatrix} f_x \\ f_y \\ f_z \end{pmatrix}_{t,PS} = \begin{pmatrix} \ddot{x} \\ \ddot{y} \\ \ddot{z} \end{pmatrix}_{f} \tag{14}$$

Daraus folgen für die Scheinlotwinkel in der Simulatorkabine

$$\vec{\varphi}_{t,PS} = \begin{pmatrix} \vartheta \\ \varphi \end{pmatrix}_{t,PS} = \begin{pmatrix} arctan\left(\frac{f_x}{f_z}\right) \\ arctan\left(\frac{f_y}{f_z}\right) \end{pmatrix}_{t,PS} \tag{15}$$

Die Eingangsgrößen werden mit den oben gezeigten Zusammenhängen zunächst entweder in einen Winkel oder in eine spezifische Kraft gewandelt. Für eine Drehgeschwindigkeit am Eingang geschieht dies durch eine einfache, im Falle einer Drehbeschleunigung durch eine zweifache Integration. Der gewonnene Winkel kann nun mittels Formel 10 in eine spezifische Kraft gewandelt werden, sofern der Scheinlotfilter mit Hilfe der Kräfte als äquivalent aufgestellt werden soll.

Figur 2 zeigt dabei den prinzipiellen Aufbau der vorliegenden Erfindung für die Seitenbewegung. Analog hierzu lässt sich problemlos die Längsbewegung implementieren. Die später noch zu diskutierenden Zusammenhänge zwischen Drehlage und translatorischer Beschleunigung gelten dabei sowohl für die Seitenbewegung als auch für die Längsbewegung, so dass zwischen Rolllage und lateraler Beschleunigung ein analoger Zusammenhang zwischen Nickwinkel und longitudinaler Beschleunigung besteht.

Für die Seitenbewegung können grundsätzlich drei relevante Flugzustände identifiziert werden, die für die Ansteuerung des Simulators relevant sind:

Fall 1: Geradeausflug mit konstanter Rolllage (hängende Fläche)

Fall 2: Fahren einer Kurve am Boden

Fall 3: Koordinierte Kurve im Flug mit gleichzeitiger Rolllage des Luftfahrzeuges

Im Fall 1 baut sich im Luftfahrzeug ein Scheinlotwinkel wegen Querkraft basierend auf der Rolllage im Geradeausflug auf. Im Fall 2 ist ebenfalls ein Scheinlotwinkel vorhanden, der auf der Zentrifugalkraft beim Durchfahren der Kurve am Boden basiert. Im Fall 3 existiert prinzipiell kein Scheinlotwinkel, da aufgrund der koordinierten Kurve bei gleichzeitiger Rolllage des Luftfahrzeuges sich die Querkräfte aufheben.

Grundsätzlich sind für die Darstellung von Scheinlotwinkeln zwei Freiheitsgrade nutzbar, der Rollwinkel und die laterale Beschleunigung. Beide unterliegen Einschränkungen. So führt eine Beschleunigung in lateraler Richtung zu einem raschen Erreichen der Grenze des Bewegungsraumes, während eine Darstellung über den Rollwinkel dagegen niederfrequent möglich ist, jedoch gegebenenfalls Wahrnehmungsschwellen eingehalten werden müssen, die eine schnelle Darstellung einer Querkraft verhindern.

Da für den Fall 1 sowohl das Luftfahrzeug als auch die Simulatorkabine einfach um die Längsachse gedreht werden müssen, ist dieser Fall grundsätzlich exakt durch den Simulator darstellbar. Der erste Anteil für den Rollwinkel der Simulatorkabine ist also der Rollwinkel des simulierten Luftfahrzeuges.

Für die Rolllage des Luftfahrzeuges gilt für Fall 3 im Gegensatz dazu, dass hier keine Querkräfte und damit keine Scheinlotwinkel entstehen. Folgt auch in diesem Fall die Simulatorkabine dem Rollwinkel des Luftfahrzeuges, wird die Differenz zwischen beiden Querkräften zu einem Scheinlotwinkel in der Simulatorkabine führen, der im Luftfahrzeug nicht existiert. Diese Differenz muss demnach vom ersten Anteil des Rollwinkels wieder abgezogen werden. Geschieht dies ohne weitere Maßnahmen, würde die Simulatorkabine still stehen bleiben.

Damit wäre der Scheinlotwinkel richtig dargestellt. Allerdings fehlt in diesem Fall die Empfindung für die Drehgeschwindigkeit beim Einleiten der Kurve. Um diese anzuregen, wird über eine geeignete Manipulation der Scheinlotwinkeldifferenz, beispielsweise über einen Hochpassfilter, eine Rollbewegung initiiert. Im Fall der Seitenbewegung führt diese Rollbewegung jedoch zu einem lateralen Beschleunigungseindruck in Vorzeichen falscher Richtung. Dieser kann durch eine entgegengesetzte laterale Beschleunigung der Simulatorkabine unter Einhaltung der Grenzen des Bewegungsraumes ausgeglichen werden. Da diese schnell erreicht wird, muss auch die Rollgeschwindigkeit rasch wieder beendet werden. Durch die korrespondierende Bewegung in lateraler und in Rollrichtung kann dies ohne falsche Bewegungsempfindung erfolgen. Zu Beginn liegen die Drehraten gewollt oberhalb der Wahrnehmungsschwelle. Die Rückdrehung dagegen muss unterhalb derselben geschehen. Solange dies gelingt, entspricht der Scheinlotwinkel in der Simulatorkabine dem des Luftfahrzeuges. Lediglich die Drehraten unterscheiden sich und die bestmögliche Korrektur des Rollwinkels ist gefunden.

Für den Fall 2 ist bei plötzlicher Zunahme der Seitenkraft in Folge einer auftretenden Zentrifugalkraft zunächst keine Lösung möglich. Da das Luftfahrzeug am Boden nur sehr kleine Rollbewegungen um die Längsachse ausführt, muss ein plötzliches Drehen der Simulatorkabine zu einer heftigen Abweichung des Beschleunigungseindruckes im Luftfahrzeug und Simulator führen. Bei der vorliegenden Erfindung wird diese Abweichung durch die Differenz des bereits eingestellten Rollwinkels und dem Scheinlotwinkel im Luftfahrzeug aufgrund einer Seitenkraft bestimmt. Die Differenz muss dem Anteil der Zentrifugalbeschleunigung am Scheinlotwinkel entsprechen. Diese Differenz wird durch eine Limitierungsfunktion umgesetzt.

Für das Problem der Darstellung von schnell auftretenden und langanhaltenden Querkräften aufgrund einer Zentrifugalkraft im Simulator gibt es systembedingt keine optimale Lösung. Allenfalls eine Anpassung der Filtereigenschaften an die auszuführenden Manöver sowie idealerweise die Vermeidung von vorzeichenfalschen Empfindungen ist möglich. In der vorliegenden Erfindung kann die Optimierung in der Limitierungsfunktion geschehen. Dies ist sinnvoll, da die notwendige Drehratenlimitierung eine Ursache des Fehlers darstellt. Hier gibt es weitreichende Möglichkeiten zur Anpassung der Systemreaktion, z.B. über die Anhebung der Drehratenlimitierung nach schnellen Manövern oder im Fall hoher Arbeitsbelastungen der Piloten. Damit kann für jedes Manöver ein guter Kompromiss zwischen Einhaltung der Wahrnehmungsschwelle und schneller Darstellung der Beschleunigung gefunden werden. Da die beiden anderen Fälle bereits so weit wie möglich richtig dargestellt werden, existiert keine Rückführung der hier gefundenen Einstellung auf andere Fälle. Damit ist auch der letzte Anteil für den Rollwinkel gefunden.

Die Funktionsweise der vorliegenden Erfindung wird anhand eines Ausführungsbeispiels der Figur 2 für die Querbewegung erläutert. Ohne Einschränkung kann der prinzipielle Aufbau auch auf die Längsbewegung übertragen werden. Es ändern sich lediglich die Zusammenhänge zwischen Winkellagen und Beschleunigungen.

Für das folgende Ausführungsbeispiel in Querrichtung werden die spezifischen Kräfte in der Hochachse (z-Richtung/E3) und in der Querachse (y-Richtung/E2) sowie die Rollrate (E1) des simulierten Luftfahrzeuges bereitgestellt. Der Anteil des Scheinlotwinkels in der durch die Hoch- und Querachse aufgespannten Ebene in Folge translatorischer Beschleunigungen berechnet sich dann zu

$$\varphi_f = atan\left(\frac{f_{aa,y}}{f_{aa,z}}\right) \tag{16}$$

wobei der Scheinlotwinkel eine Abweichung zwischen der Hochachse des Fahrzeuges im fahrzeugfesten Koordinatensystem und dem wahrgenommenen Beschleunigungsvektor darstellt. Die Berechnung ist in Figur 2 durch M1/T1 dargestellt.

Des Weiteren wird die eingehende Rollrate am Pilotensitz integriert, dargestellt durch E1, so dass der Rollwinkel des simulierten Luftfahrzeuges mittels

$$\varphi_{\omega} = \int \omega_{aa,x} dt \qquad (17)$$

bestimmt werden kann.

Nachdem alle Eingangssignale auf Winkel umgerechnet wurden, erfolgt die Aufstellung des eigentlichen Filters. Als Ausgangssignal erhält man die Winkellage $\varphi_{sim}$ (A1) und die translatorische Beschleunigung der Simulatorkabine $y_{pp,sim}$ (A2). Die Winkellage des Simulators entspricht dabei der Summe (S4) aus dem Lagewinkel des Luftfahrzeuges $\varphi_{\omega}$ und einem limitierten Ausgleichswinkel $\varphi_{A,lim}$. Ersterer entspricht dem gewandelten Eingangssignal der Drehgeschwindigkeit $\omega_{aa,x}$. Zweiterer entspricht dem limitierten Ausgleichswinkel, mit dem die Simulatorkabine zur Darstellung langanhaltender translatorischer Beschleunigungen gegenüber dem Erdlot gekippt werden soll.

Ohne weitere Filterkomponenten ist mit diesem Signal der erste Fall, der Zustand einer Rolllage mit hängenden Flächen, vollständig und fehlerfrei abbildbar.

Für den Fall 3, d.h. für die Darstellungen der Beschleunigungseindrücke in einer koordinierten Kurve, muss dagegen der durch die Rollbewegung sich aufbauende Drehwinkel in der Simulatorkabine $\varphi_{\omega}$ mit dem Scheinlotwinkel des Luftfahrzeuges cpf verglichen werden (S1). In diesem Falle werden beide Winkel voneinander abweichen, da im Luftfahrzeug aufgrund von Zentrifugalkräften die Scheingewichtskraft genau in Richtung der z-Achse (Hochachse) weist. Im Simulator fehlt diese Kraft. Die Differenz von beidem (S1) könnte nun einfach zur Rolllage addiert werden und der Scheinlot ist jederzeit richtig. In diesem Fall fehlt allerdings auch die spürbare Rollbewegung im Simulator, da die Kabine einfach still stehenbleiben würde.

Auf der anderen Seite führt ein zunehmender Rollwinkel in der Kabine zu einer vorzeichenverkehrten Seitenkraft. Dies ist aus Formel 10 leicht zu sehen. Die einzige Möglichkeit ist daher, nach einer kurzen, vorzeichenrichtigen Rollbewegung den dann entstehenden Rollwinkel wieder zurückzuführen und den dadurch entstehenden Fehler aufgrund des sich aufbauenden Rollwinkels soweit möglich durch eine entsprechende translatorische Bewegung bzw. Beschleunigung auszugleichen. Dies geschieht über einen Hochpassfilter (HP1) mit welchem die Scheinlotwinkeldifferenz $\Delta\varphi$ (S1) manipuliert wird. Das Ergebnis ist ein hochfrequenter Differenzanteil $\varphi_{ypp}$ der Scheinlotwinkeldifferenz in Richtung der Rollgeschwindigkeit des Luftfahrzeuges $\Delta_{\omega aa,x}$. Beispielsweise können die in einen Hochpassfilter dritter Ordnung eingesetzt werden, welcher die Rolllage der Simulatorkabine wieder in die Nulllage zurückführt.

Auch bei diesem Manöver entsteht ein vorzeichenfalsches Scheinlot in der Simulatorkabine. Um dieses zu kompensieren, wird die Kabine in die umgekehrte Richtung beschleunigt. Hierbei ist der Bewegungsraum in translatorischer Richtung der begrenzende Faktor. Der oben erwähnte Hochpassfilter muss also so ausgelegt werden, dass diese Grenzen nicht verletzt werden. Zusätzlich zu dem Hochpassfilter können die Auswirkungen eines Signals ebenfalls über Proportionalitätsfaktor manipuliert werden. Denkbar sind zudem weitere Möglichkeiten im translatorischen Bewegungsraum bestmöglich zu nutzen.

Für das Ausgangssignal $y_{pp,sim}$ (A2) ist nunmehr noch eine Rück-Umwandlung in translatorische Beschleunigungen mittels

$$y_{pp,sim} = -g \cdot sin(\varphi_{ypp}) \qquad (18)$$

(T2/F1) notwendig. Durch die korrespondierenden Signale in Roll- und y-Richtung wird bei Einhaltung der Grenze des Bewegungsraumes das Scheinlot in der Simulatorkabine nach wie vor richtig dargestellt. Damit entspricht für diesen Fall die Summe in S2 aus Rollwinkel der Simulatorkabine in Folge einer Rollbewegung des Luftfahrzeuges ($\varphi_{\omega}$) und Rollwinkel der Simulatorkabine ausgeglichen durch eine translatorische Beschleunigung in der Querachse $\varphi_{ypp}$ dem Scheinlotwinkel des Luftfahrzeuges ermittelt durch die Formel 16.

Für den zweiten Fall, einer Kurve am Boden, korrespondiert die Drehung des Scheinlotes nicht mit einer Rollbewegung des Luftfahrzeuges. In der Folge ist direkt nach Einleitung der Kurve ein Scheinlotwinkel vorhanden. Diesen könnte die Simulatorkabine folgen, jedoch würde die Drehbewegung durch den Piloten erfasst. Da die Beschleunigungsempfindung dann im Widerspruch zu den richtigen Lageinformationen stünde, wäre mit Schwindel oder weitreichenden Folgen zu rechnen.

Da das Scheinlot im Luftfahrzeug ohne Drehung um die Rollachse entsteht, erhält man an der ersten Vergleichsstelle (S1) analog zu Fall 3 eine Differenz. Diese führt wieder zu einem nicht hochfrequenten Differenzanteil $\varphi_{ypp}$ am Ausgang des Hochpassfilters HP1 gefolgt von einer Ausgleichsfunktion in translatorischer Richtung $\varphi_{ypp,sim}$.

Diesmal entspricht die Summe aus Rollwinkel ($\varphi_{\omega}$ und dem hochfrequenten Differenzanteil $\varphi_{ypp}$ am Ausgang

von S2 aber nicht dem Scheinlotwinkel im Luftfahrzeug cpf. Die Differenz beider Größen wird in der Differenz S3 gebildet und entspricht dem Ausgleichswinkel $\varphi_a$. Unter Einhaltung der Wahrnehmungsschwelle ist nun eine Korrektur möglich. Anders als im ersten und dritten Fall ist bis auf Bewegungen, die unterhalb der Wahrnehmungsschwelle umgesetzt werden können, eine scheinlotrichtige Umsetzung der Signale nicht möglich. Durch eine geschickte Limitierung (L) dessen Ergebnis der limitierte Ausgleichswinkel $\varphi_{a,lin}$ ist, kann lediglich versucht werden, das bestmögliche Ergebnis zu erzielen.

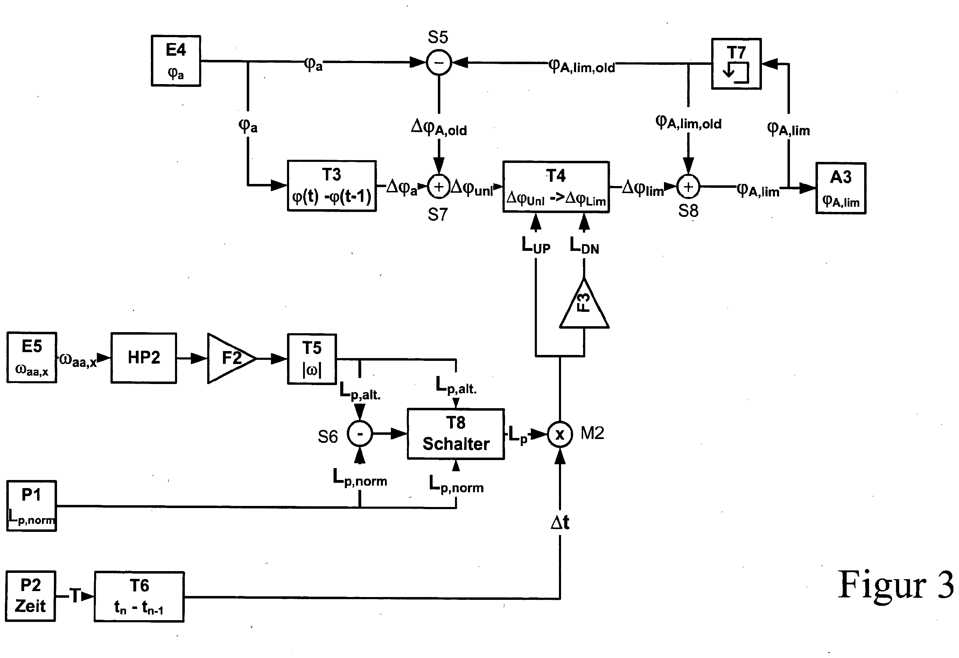

Figur 3 zeigt bespielhaft eine Ausführung der Drehratenbegrenzung. Die Limitierung besitzt einen obligatorischen Eingang E4, über den der Ausgleichswinkel $\varphi_a$ bereitgestellt sowie den Eingang E5 zur Übergabe der Rollgeschwindigkeit $\omega_{aa,x}$. Letzterer dient lediglich der Anpassung der Begrenzungswerte und kann beliebig gegen andere verfügbare Informationen zur Optimierung der Drehratenbegrenzung ausgetauscht oder auch fallengelassen werden.

Des Weiteren gehen die beiden Parameter P1 für den kleinsten Begrenzungswert $L_{p,norm}$ und P2 für die aktuelle Systemzeit T in die Funktion ein.

Über den Hochpassfilter HP2 und den Faktor F2 werden im Fall sich rasch ändernder Drehgeschwindigkeiten die Drehratenbegrenzung für eine gewisse Zeit nach dem Ereignis heraufgesetzt. Durch die Berechnung des Betrages bei T5 erhält man den absoluten Grenzwert $L_{p,alt}$. Auf der anderen Seite wird durch P1 ein Mindestwert $L_{p,norm}$ für die Wahrnehmungsschwelle festgelegt. Auch dieser Parameter ist grundsätzlich situationsabhängig änderbar. Über den Vergleich bei S6 und der Auswahl T8 wird der jeweils größere Wert als Absolutwert für die maximal zulässige Drehrate $L_p$ gewählt. Durch Bildung der Differenz aus aktueller und vorhergehender Systemzeit T bei T6 erhält man die Länge des Zeitschrittes $\delta t$. Diese mit der zulässigen Drehrate multipliziert (M2) führt zur oberen Begrenzung der aktuellen Winkeländerung $L_{UP}$ sowie nach Multiplikation mit dem Faktor -1 (F3) zur unteren Begrenzung der aktuellen Winkeländerung $L_{DN}$.

Der eingehende Ausgleichswinkel $\varphi_a$ wird bei T3 zum einen mit dem Wert aus dem vorhergehenden Schritt verglichen, so dass das Ergebnis dem aktuellen Zeitschritt errechnete Winkeländerung $\Delta\varphi_a$ ist. Zum anderen wird $\varphi_a$ mit der gesamten Winkeldifferenz zwischen aktuellem Wert und dem vergangenen Zeitschritt errechnete Gesamtwinkel $\varphi_{A,lim,old}$ verglichen (S5). Das Ergebnis ist der aus vorangehenden Zeitschritten verbliebene Winkel $\Delta\varphi_{A,old}$. Dieser wird zu dem aktuellen Winkelschritt addiert (S7), so dass die noch zu fahrende, unbegrenzte Winkeldifferenz $\Delta\varphi_{unl}$ zur Verfügung steht. Diese wird bei T4 unter Verwendung der Grenzwerte $L_{UP}$ und $L_{DN}$ in $\Delta\varphi_{lim}$ auf den zulässigen Wertebereich begrenzt. Diese limitierte Winkeldifferenz wird in S8 zum Gesamtwinkel $\varphi_{A,lim,old}$ addiert. Das Ergebnis ist der limitierte Ausgleichswinkel $\varphi_{A,lim}$. Dieser wird wiederum in T7 für den nächsten Zeitschritt gespeichert.

Fall 1: Geradeausflug mit konstantem Rollwinkel (hängende Fläche)

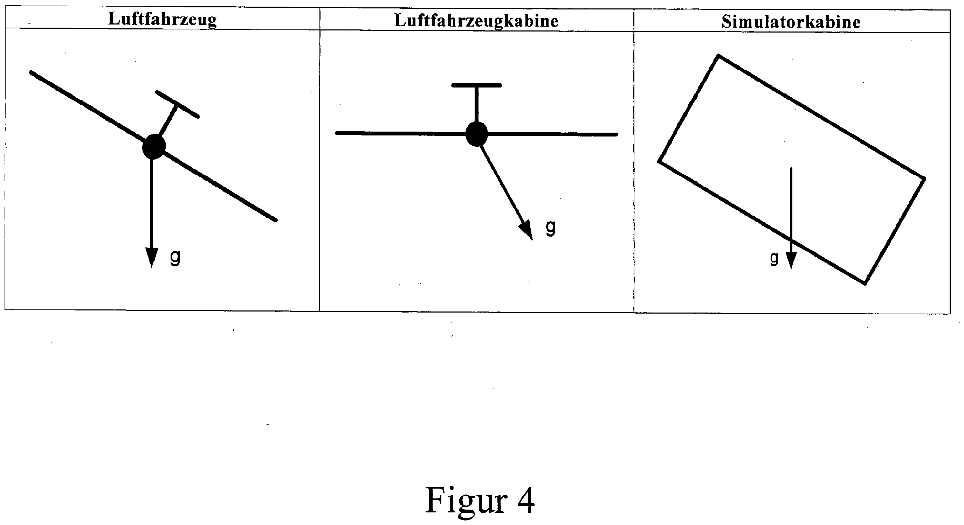

Figur 4 zeigt schematisch das Scheinlot und Scheingewichtsvektor im Geradeausflug mit konstantem Rollwinkel aus verschiedenen Perspektiven. Links ist das Luftfahrzeug gezeigt, wie es sich stehend auf dem Boden für den Betrachter von außen in diesem Flugzustand zeigen würde. Das Scheinlot entspricht dabei dem Erdlot. Aus Sicht der Luftfahrzeugkabine ergibt sich für den Pilot jedoch ein anderes Bild. Durch den konstanten Rollwinkel wirkt sich für den Piloten in seinem Referenzsystem "Flugzeugkabine" dies so aus, als übe er auf den Piloten eine Querkraft in Richtung des Rollwinkels aus.

Um dies durch den Simulator abzubilden, reicht es aus, wenn die Simulatorkabine entsprechend dem Drehwinkel gedreht wird, bei entsprechender Anpassung der Innendarstellung. Da die Rollbewegung des Flugzeuges vom Simulator ohne Verlust nachgefahren werden kann, ist hier eine identische Bewegung möglich, ohne dass ein falscher Bewegungseindruck entsteht.

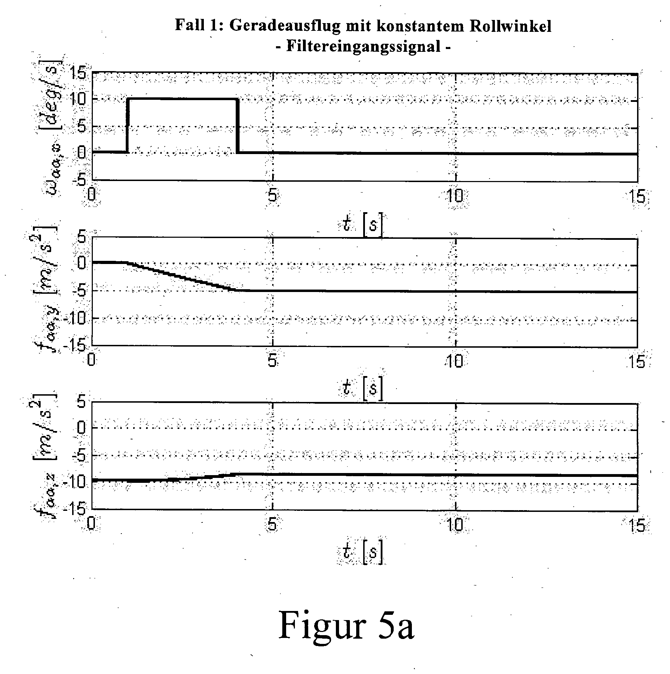

Für dieses Beispiel zeigt Figur 5a die entsprechenden Eingangssignale. Die obere Abbildung zeigt dabei die Drehrate bis zur Erreichung des Endwinkels, gefolgt von den spezifischen Kräften in der Querachse und den spezifischen Kräften in der Hochachse.

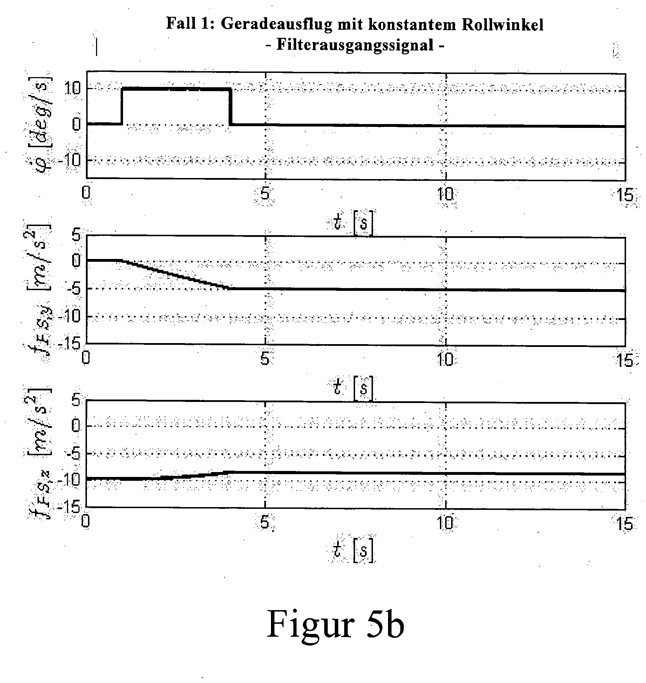

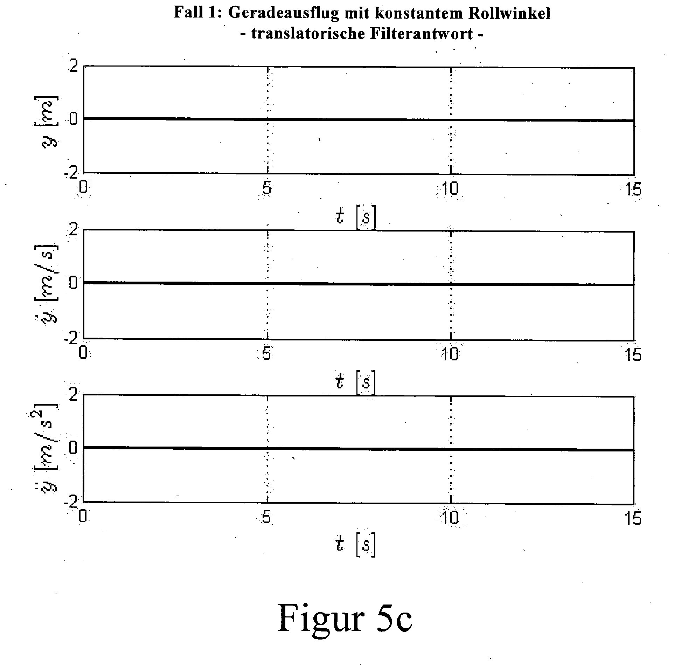

Das Ausgangssignal zur Ansteuerung des Simulators gemäß der vorliegenden Erfindung ist in Figur 5b gezeigt. Figur 5c zeigt dabei die Umsetzung des Ausgangssignals für die translatorische Bewegung in Position (obere Darstellung), Geschwindigkeit (mittlere Darstellung) und Beschleunigung (untere Darstellung). Zu erkennen ist, dass in diesem Fall keine translatorische Beschleunigung bzw. Bewegung des Simulators zur Simulation des Flugzustandes notwendig ist.

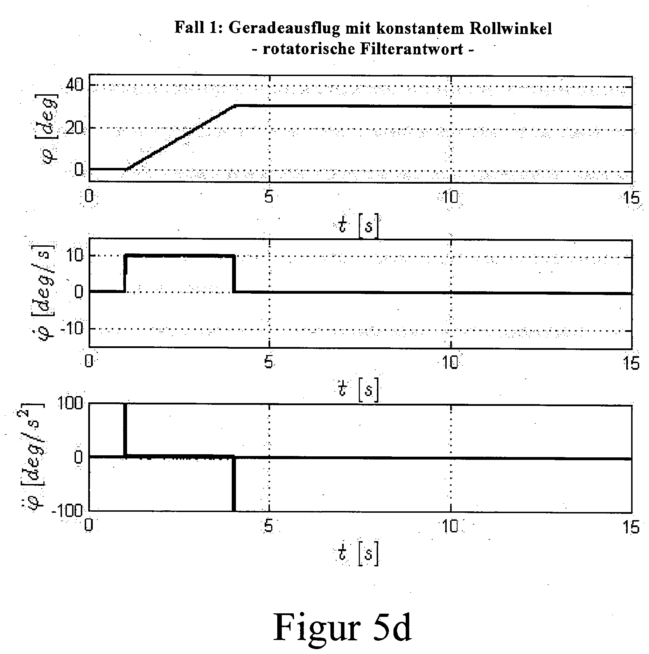

Figur 5d zeigt schließlich das Ausgangssignal als Drehwinkel (obere Abbildung), Drehrate (mittlere Abbildung) und Drehbeschleunigung (untere Abbildung). Insbesondere aus der oberen Darstellung ist erkennbar, dass eine stetige Winkeländerung über die Zeit verlustfrei angefahren werden kann.

Fall 2: Kurve am Boden

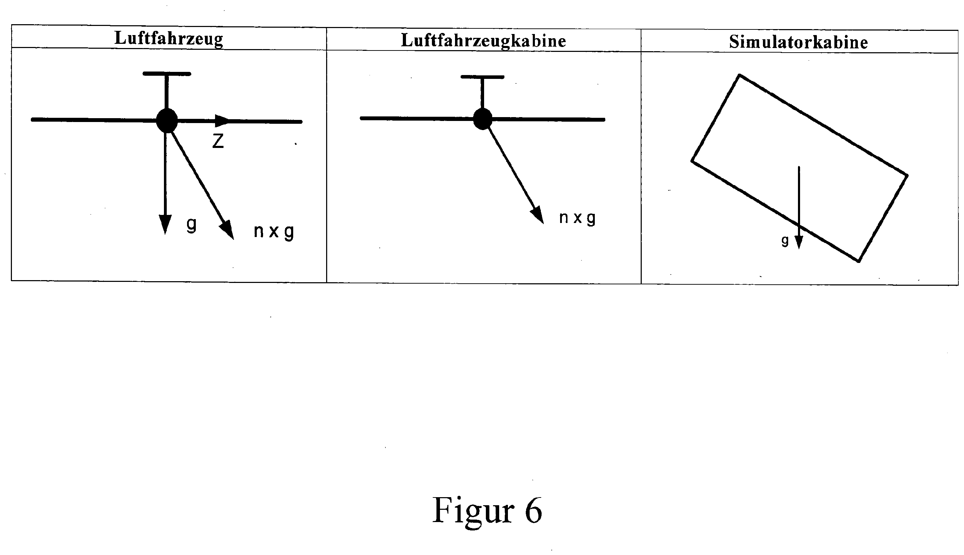

Figur 6 zeigt in gleicher Weise schematisch den Fall einer Kurve am Boden. Bei einer Kurve am Boden treten zusätzlich zur Erdbeschleunigung Zentrifugalkräfte auf, die den Scheinlotvektor ähnlich wie beim Kurvenflug drehen.

Jedoch kann sich nahezu kein Rollwinkel einstellen, was zu einer in der Flugzeugkabine spürbaren Querkraft führt. In Simulatoren wird diese Querkraft wiederum durch eine Drehung der Kabine dargestellt werden. Dies führt zu einer Differenz in der Rollbewegung zwischen Flugzeug und Simulatorkabine, welche idealerweise unterhalb der Wahrnehmungsschwelle vollzogen werden muss. Dies führt zusätzlich zu der generellen Problematik des Lastvielfachen bei Ein- und Ausleitvorgängen zu Fehlern. Insbesondere durch die aufgrund des beschränkten Bewegungsraumes schnelle Rückführung der Beschleunigung mittels Filterfunktion kann es sogar zu Vorzeichen falschen Beschleunigungseindrücken kommen.

Links ist wieder das Luftfahrzeug von außen gezeigt, das horizontal ausgerichtet ist, der Gewichtsvektor jedoch von dem Erdlot abweicht. Dies ist in der mittleren Abbildung zu erkennen, die die Kräfte aus Sicht der Luftfahrzeugkabine zeigt.

Um dies in der Simulatorkabine umzusetzen, wird die Simulatorkabine unterhalb der Wahrnehmungsschwelle gedreht, während die gesamte Anzeige der Instrumente und der Außendarstellung in der Kabine nach wie vor eine horizontale Ausrichtung beibehält. Das Ergebnis ist die Wahrnehmung einer Zentrifugalkraft basierend auf der Erdbeschleunigung.

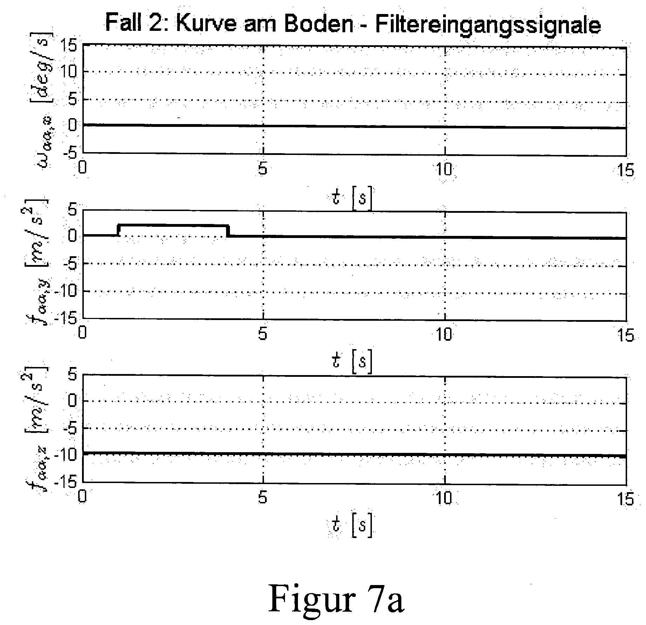

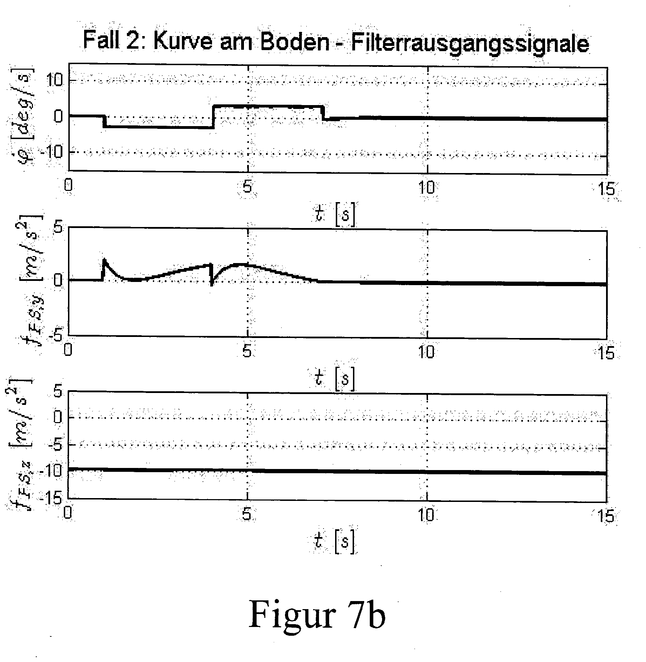

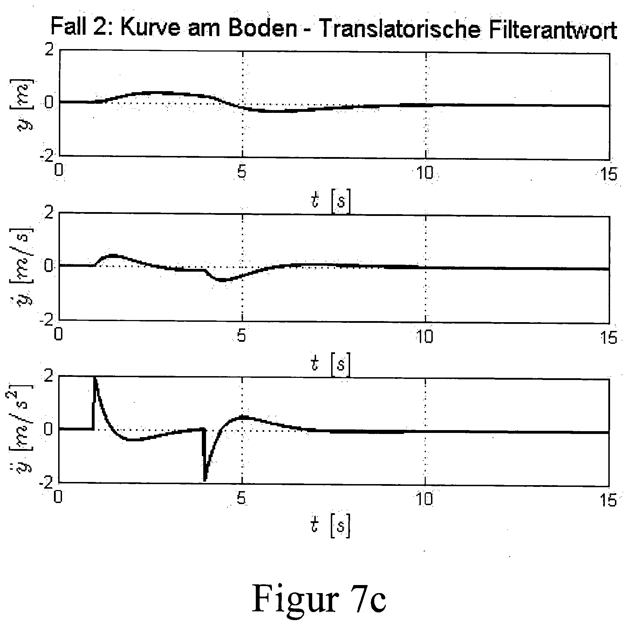

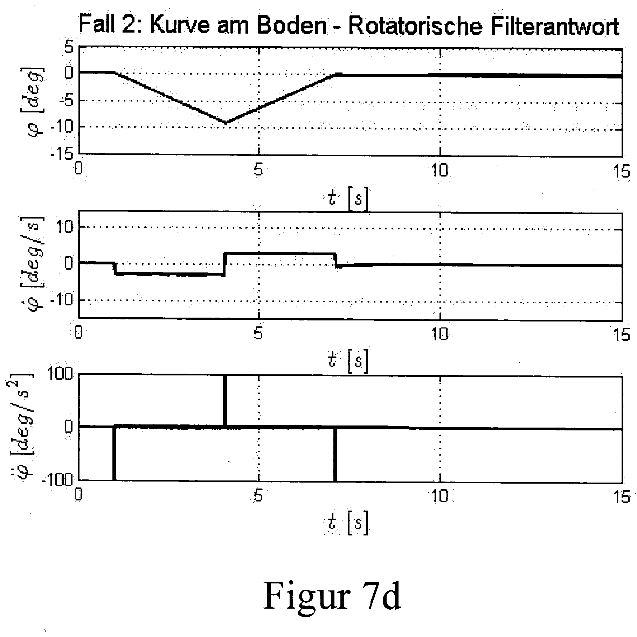

Analog zu den Figuren 5a bis 5d zeigt Figur 7a die Eingangssignale in den Filtern, Figur 7b die Ausgangssignale, Figur 7c die translatorischen Bewegungen und Figur 7d die rotatorischen Bewegungen.


Fall 3: Koordinierte Kurve


Im dritten Fall befindet sich das Luftfahrzeug im schiebefreien Kurvenflug. Ein Rollwinkel sorgt für die Kompensation der durch die zusätzlich zur Gewichtskraft angreifenden Fliehkräfte herbeigeführten Drehung des Scheinlots. Dieses weist für den Piloten in Richtung der Hochachse. Das auftretende Lastvielfache kann aus oben genannten Gründen nicht dargestellt werden. Grundsätzlich könnte die Simulatorkabine während des gesamten Manövers still stehen bleiben, was allerdings während des Ein- und Ausleitens der Kurve zu einem Fehler führt, da keinerlei Rollbewegung spürbar ist. Wünschenswert ist deshalb zumindest eine kurze Andrehung in der Rollachse, welche möglichst unmerklich wieder ausgeleitet wird.

Betrachtet man das Luftfahrzeug von außen, so ergibt sich hierbei eine Abweichung des Scheinlotes von im Erdlot, wobei das Scheinlot hierbei aus Sicht der Flugzeugkabine (mittlere Darstellung) der Hochachse entspricht. Dementsprechend verbleibt die Simulatorkabine unverändert, bis auf die Ein- und Ausleitung der Kurve, die mit einer kurzen Rollbewegung kompensiert wird.

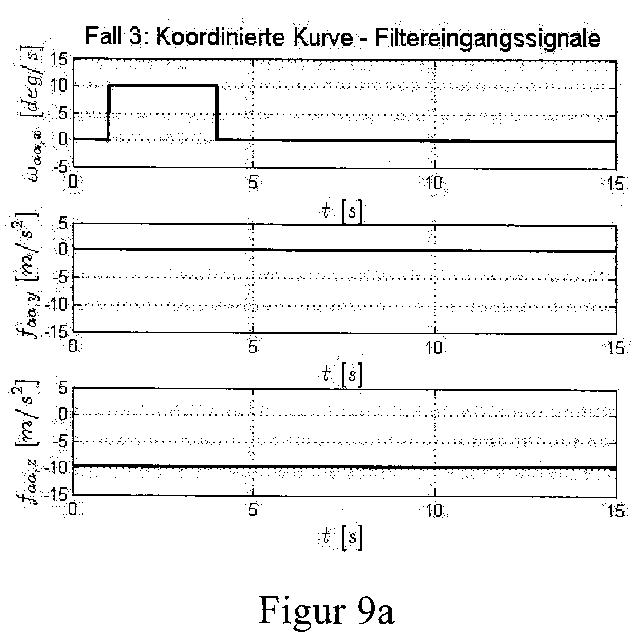

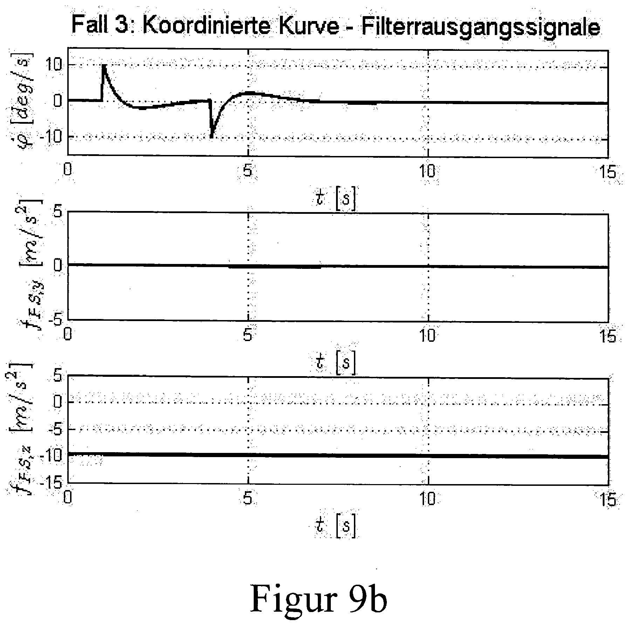

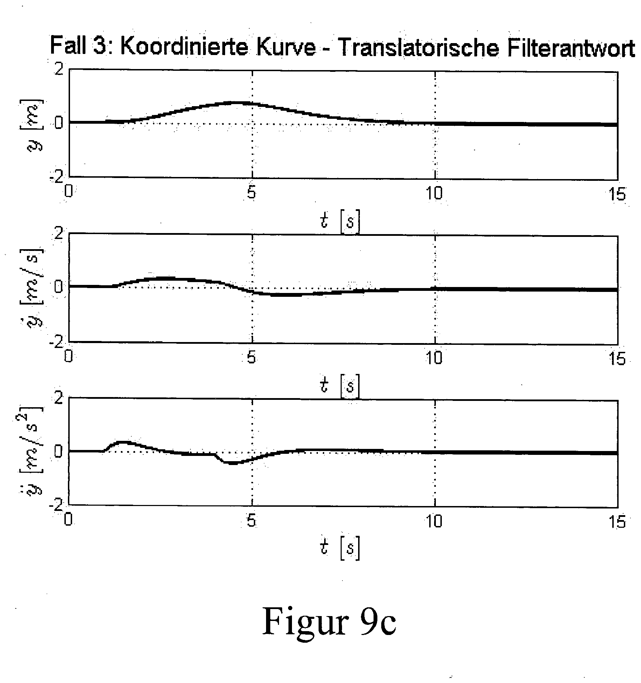

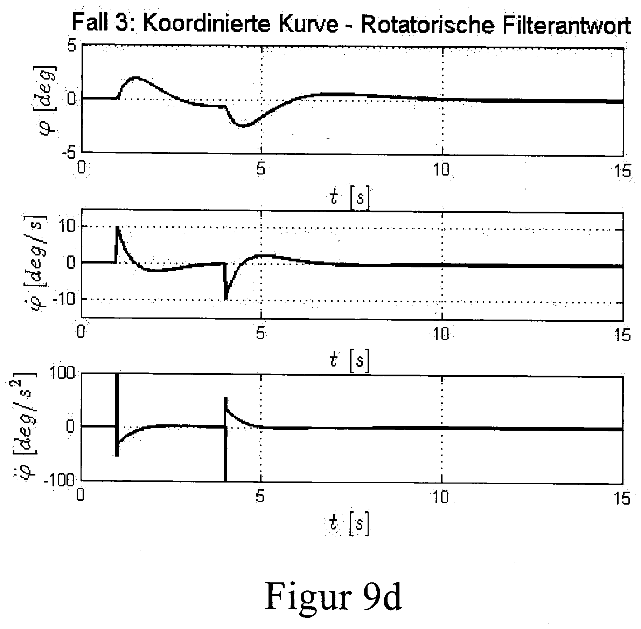

In analoger Art und Weise zeigen die Figuren 9a bis 9d die entsprechenden Ein- und Ausgangssignale des Filters.

Liste der verwendeten Indizies und Zeichen

| Index | Bedeutung |
| --- | --- |
| PA | Position der Piloten im Luftfahrzeug |
| PS | Position der Piloten im Flugsimulator |

| Zeichen | Bedeutung |
| --- | --- |
| $\vec{a}_{aa}$ | Vektor der Beschleunigung am Pilotensitz im Luftfahrzeug |
| $\vec{f}_{aa}$ | Vektor der spezifischen Kräfte am Pilotensitz im Luftfahrzeug |
| $f_{aa,x}$ | Spezifische Kraft in longitudinaler Richtung am Pilotensitz im Luftfahrzeug |
| $f_{aa,y}$ | Spezifische Kraft in lateraler Richtung am Pilotensitz im Luftfahrzeug |
| $f_{aa,z}$ | Spezifische Kraft in vertikaler Richtung am Pilotensitz im Luftfahrzeug |
| $f_{PS,x}$ | Spezifische Kraft in longitudinaler Richtung im Flugsimulator |
| $f_{PS,y}$ | Spezifische Kraft in lateraler Richtung im Flugsimulator |
| $f_{PS,z}$ | Spezifische Kraft in vertikaler Richtung im Flugsimulator |
| $\vec{f}_{t,PS}$ | Vektor der spezifischen Kraft infolge translatorischer Beschleunigung im Flugsimulator |
| $f_{x,t.PS}$ | Spezifische Kraft in longitudinaler Richtung im Flugsimulator infolge longitudinaler Beschleunigung |
| $f_{y,t,P,S}$ | Spezifische Kraft in lateraler Richtung im Flugsimulator infolge lateraler Beschleunigung |

(fortgesetzt)

| Zeichen | Bedeutung |
|---|---|
| $f_{z,t,PS}$ | Spezifische Kraft in vertikaler Richtung im Flugsimulator infolge vertikaler Beschleunigung |
| $\vec{f}_{\omega,PA}$ | Vektor der spezifischen Kräfte am Pilotensitz im Luftfahrzeug infolge eines Lagewinkels |
| $\vec{f}_{\omega,PS}$ | Vektor der spezifischen Kräfte am Pilotensitz im Flugsimulator infolge eines Lagewinkels |
| $f_{x,\omega,PA}$ | Spezifische Kraft in longitudinaler Richtung am Pilotensitz im Luftfahrzeug infolge eines Lagewinkels |
| $f_{y,\omega,PA}$ | Spezifische Kraft in lateraler Richtung am Pilotensitz im Luftfahrzeug infolge eines Lagewinkels |
| $f_{z,\omega,PA}$ | Spezifische Kraft in vertikaler Richtung am Pilotensitz im Luftfahrzeug infolge eines Lagewinkels |
| $f_{x,\omega,PS}$ | Spezifische Kraft in longitudinaler Richtung am Pilotensitz im Flugsimulator infolge eines Lagewinkels |
| $f_{y,\omega,PS}$ | Spezifische Kraft in lateraler Richtung am Pilotensitz im Flugsimulator infolge eines Lagewinkels |
| $f_{z,\omega,PS}$ | Spezifische Kraft in vertikaler Richtung am Pilotensitz im Flugsimulator infolge eines Lagewinkels |
| $g$ | Erdbeschleunigung |
| $\vec{g}_{PA}$ | Vektor der Erdbeschleunigung am Pilotensitz |
| $\ddot{x}_f$ | Longitudinale Beschleunigung im kabinenfesten Koordinatensystem |
| $\ddot{y}_f$ | Laterale Beschleunigung im kabinenfesten Koordinatensystem |
| $y_{pp,sim}$ | Laterale Beschleunigung am Pilotensitz im Flugsimulator |
| $\ddot{z}_f$ | Vertikale Beschleunigung im kabinenfesten Koordinatensystem |
| $\phi_{PA}$ | Rollwinkel im Pilotensitz des Luftfahrzeuges |
| $\phi_{PS}$ | Rollwinkel im Pilotensitz des Flugsimulators |
| $\theta_{PA}$ | Nickwinkel im Pilotensitz des Luftfahrzeuges |
| $\theta_{PS}$ | Nickwinkel im Pilotensitz des Flugsimulators |
| $\vartheta_{x,PA}$ | Drehung des Scheinlotes um die Querachse im Luftfahrzeug |
| $\vartheta_{x,PS}$ | Drehung des Scheinlotes um die Querachse im Flugsimulator |
| $\vartheta_{\omega,PA}$ | Drehung des Scheinlotes um die Querachse infolge einer Nicklage im Luftfahrzeug |
| $\vartheta_{\omega,PS}$ | Drehung des Scheinlotes um die Querachse infolge einer Nicklage im Flugsimulator |
| $\vartheta_{t,PS}$ | Drehung des Scheinlotes um die Querachse infolge translatorischer Beschleunigung im Flugsimulator |
| $\varphi_f$ | Drehung des Scheinlotes infolge spezifischer Kräfte in lateraler Richtung |
| $\varphi_{ypp}$ | Äquivalenter Scheinlotwinkel um die Längsachse zu einer lateralen Beschleunigung |
| $\varphi_{y,PA}$ | Drehung des Scheinlotes um die Längsachse im Luftfahrzeug |
| $\varphi_\omega$ | Drehung des Scheinlotes um die Längsachse infolge einer Rolllage |
| $\varphi_{t,PS}$ | Drehung des Scheinlotes um die Längsachse infolge translatorischer Beschleunigung im Flugsimulator |
| $\vec{\varphi}_{PA}$ | Vektor der Drehung des Scheinlotes am Pilotensitz im Luftfahrzeug |
| $\vec{\varphi}_{PS}$ | Vektor der Drehung des Scheinlotes am Pilotensitz im Flugsimulator |
| $\vec{\varphi}_{t,PA}$ | Vektor der Drehung des Scheinlotes infolge translatorischer Beschleunigung am Pilotensitz im Luftfahrzeug |
| $\vec{\varphi}_{t,PS}$ | Vektor der Drehung des Scheinlotes infolge translatorischer Beschleunigung am Pilotensitz im Flugsimulator |
| $\vec{\varphi}_{\omega,PA}$ | Vektor der Drehung des Scheinlotes infolge eines Lagewinkels am Pilotensitz im Luftfahrzeug |

(fortgesetzt)

| Zeichen | Bedeutung |
|---|---|
| $\overrightarrow{\varphi}_{\omega,PS}$ | Vektor der Drehung des Scheinlotes infolge eines Lagewinkels am Pilotensitz im Flugsimulator |
| $\dot{\omega}_{aa}$ | Vektor der rotatorischen Beschleunigungen im Luftfahrzeug |
| $\overrightarrow{\omega}_{aa}$ | Vektor der rotatorischen Geschwindigkeiten im Luftfahrzeug |
| $\dot{\omega}_{aa,x}$ | Rotatorische Beschleunigung um die Längsachse im Luftfahrzeug |
| $\dot{\omega}_{aa,y}$ | Rotatorische Beschleunigung um die Querachse im Luftfahrzeug |
| $\dot{\omega}_{aa,z}$ | Rotatorische Beschleunigung um die Hochachse im Luftfahrzeug |
| $\omega_{aa,x}$ | Rotatorische Geschwindigkeit um die Längsachse im Luftfahrzeug |
| $\omega_{aa,y}$ | Rotatorische Geschwindigkeit um die Querachse im Luftfahrzeug |
| $\omega_{aa,z}$ | Rotatorische Geschwindigkeit um die Hochachse im Luftfahrzeug |

**Patentansprüche**

1. Verfahren zum Ansteuern eines Simulators zur Simulation von translatorischen und rotatorischen Bewegungen eines Fahrzeuges, wobei in Bezug auf die drei Fahrzeugachsen eine Drehrate um eine erste Fahrzeugachse und die jeweils in einer zweiten und dritten Fahrzeugachse wirkenden spezifischen Kräfte aus einem das Fahrzeug simulierenden Bewegungsmodel bereitgestellt und in translatorische und rotatorische Steuerbefehle zur Ansteuerung des Simulators umgewandelt werden, umfassend die die mittels einer Steuereinheit ausgeführten Schritte:

    - Berechnen eines Drehwinkels ($\varphi_\omega$) aus der Drehrate um die erste Fahrzeugachse,

    **gekennzeichnet durch**

    - Berechnen eines Scheinlotwinkels ($\varphi_f$) zwischen der Hochachse als dritte Fahrzeugachse und dem aufgrund der in der zweiten und dritten Fahrzeugachse wirkenden spezifischen Kräfte entstehenden Scheinlot aus den spezifischen Kräften,
    - Berechnen einer Scheinlotwinkeldifferenz ($\Delta\varphi$) zwischen dem Drehwinkel ($\varphi_\omega$) und dem Scheinlotwinkel ($\varphi_f$) und Ermitteln eines hochfrequenten Differenzanteils ($\varphi_{ypp}$) der Scheinlotwinkeldifferenz ($\Delta\varphi$), der durch eine translatorische Bewegung des Simulators ausgeglichen werden soll, in Abhängigkeit von der Scheinlotwinkeldifferenz,
    - Berechnen von translatorischen Steuerbefehlen ($y_{pp,sim}$) zur Ansteuerung des Simulators für eine translatorische Bewegung des Simulators in der zweiten Fahrzeugachse in Abhängigkeit von dem ermittelten hochfrequenten Drehwinkelanteils ($\varphi_{ypp}$) der Scheinlotwinkeldifferenz ($\Delta\varphi$),
    - Berechnen eines Ausgleichswinkels ($\varphi_a$), der einem zu simulierenden Beschleunigungswert in der zweiten Fahrzeugachse durch Neigung des Simulator gegenüber dem Erdlot entspricht, in Abhängigkeit von dem Drehwinkel ($\varphi_\omega$), dem hochfrequenten Differenzanteil ($\varphi_{ypp}$) der Scheinlotwinkeldifferenz ($\Delta\varphi$) und dem Scheinlotwinkel (cpf),
    - Berechnen eines limitierten Ausgleichswinkels ($\varphi_{a,lim}$) aus dem Ausgleichswinkel ($\varphi_a$) mittels einer physiologischen Drehratenlimitierung, die eine Neigung des Simulators unterhalb der Wahrnehmungsschwelle begrenzt, und
    - Berechnen von rotatorischen Steuerbefehlen ($\varphi_{sim}$) zur Ansteuerung des Simulators für eine rotatorische Bewegung des Simulators um die erste Fahrzeugachse in Abhängigkeit von dem limitierten Ausgleichswinkel ($\varphi_{a,lim}$) und dem Drehwinkel ($\varphi_\omega$).

2. Verfahren nach Anspruch 1, **dadurch gekennzeichnet, dass** der hochfrequente Differenzanteil ($\varphi_{ypp}$) der Scheinlotwinkeldifferenz ($\Delta\varphi$ mittels eines Hochpassfilters ermittelt wird.

3. Verfahren nach Anspruch 1 oder 2, **dadurch gekennzeichnet, dass** die translatorischen Steuerbefehle ($y_{pp,sim}$) für eine translatorische Bewegung des Simulators in der zweiten Fahrzeugachse aus dem Produkt der Erdbeschleunigung (g) und dem Sinus des ermittelten hochfrequenten Differenzanteils ($\varphi_{ypp}$) der Scheinlotwinkeldifferenz ($\Delta\varphi$) berechnet wird.

**4.** Verfahren nach einem der vorhergehenden Ansprüche, **dadurch gekennzeichnet, dass** der Ausgleichswinkel ($\varphi_{a,lim}$) aus der Summe des Drehwinkels ($\varphi_\omega$) und des hochfrequenten Differenzanteils ($\varphi_{ypp}$) der Scheinlotwinkeldifferenz ($\Delta\varphi$) abzüglich des Scheinlotwinkels ($\varphi_f$) berechnet wird.

**5.** Verfahren nach einem der vorhergehenden Ansprüche, **dadurch gekennzeichnet, dass** die rotatorischen Steuerbefehle für eine rotatorische Bewegung des Simulators um die erste Fahrzeugachse aus der Summe des limitierten Ausgleichswinkels ($\varphi_{a,lim}$) und des Drehwinkels ($\varphi_\omega$) berechnet wird.

**6.** Verfahren nach einem der vorhergehenden Ansprüche, **dadurch gekennzeichnet, dass** der limitierte Ausgleichswinkel ($\varphi_{a,lim}$) mittels der physiologischen Drehratenlimitierung in Abhängigkeit von dem Ausgleichswinkel ($\varphi_a$) und der aus dem Bewegungsmodell bereitgestellten Drehrate berechnet wird, wobei ein Begrenzungswert zur Limitierung des Ausgleichswinkels ($\varphi_a$) in Abhängigkeit von einem vorgegebenen minimalen Begrenzungswert und einem hochfrequenten Drehratenanteil der Drehrate ermittelt wird.

**7.** Simulator zur Simulation von translatorischen und rotatorischen Bewegung eines Fahrzeuges, der eine mittels Aktuatoren gegenüber einer festen Referenzebene bewegbare Plattform aufweist, mit einer Steuereinheit, die zur Durchführung des Verfahrens nach einem der Ansprüche 1 bis 6 zur Ansteuerung des Simulators eingerichtet ist.

**8.** Simulator nach Anspruch 7, **dadurch gekennzeichnet, dass** der Simulator ein Hexapod ist.

**9.** Computerprogramm mit Programmcodemitteln eingerichtet zur Durchführung des Verfahrens nach einem der Ansprüche 1 bis 6, wenn das Computerprogramm auf einer Rechenmaschine ausgeführt wird.

**Claims**

**1.** A method for actuating a simulator for simulating translational and rotational movements of a vehicle, wherein, in relation to the three vehicle axes, a rotational rate about a first vehicle axis and the specific forces respectively acting along a second vehicle axis and a third vehicle axis are provided from a movement model that simulates the vehicle and converted into translational and rotational control commands for actuating the simulator, **characterized by** the following steps that are carried out by means of a control unit:

- calculating a rotational angle from the rotational rate about the first vehicle axis,
- calculating, from the specific forces, an apparent perpendicular angle between the vertical axis as the third vehicle axis and the apparent perpendicular arising on account of the specific forces acting along the second vehicle axis and third vehicle axis,
- calculating an apparent perpendicular angle difference between the rotational angle and the apparent perpendicular angle and ascertaining a high-frequency difference component of the apparent perpendicular angle difference that is intended to be compensated by a translational movement of the simulator, depending on the apparent perpendicular angle difference,
- calculating translational control commands for actuating the simulator for a translational movement of the simulator along the second vehicle axis, depending on the ascertained high-frequency rotational angle component of the apparent perpendicular angle difference,
- calculating a compensation angle that corresponds to an acceleration value to be simulated along the second vehicle axis by inclining the simulator in relation to the perpendicular to the Earth, depending on the rotational angle, the high-frequency difference component of the apparent perpendicular angle difference and the apparent perpendicular angle,
- calculating a limited compensation angle from the compensation angle by means of a physiological rotational rate limitation, which restricts an inclination of the simulator below the perception threshold, and
- calculating rotation control commands for actuating the simulator for a rotational movement of the simulator about the first vehicle axis, depending on the limited compensation angle and the rotational angle.

**2.** The method as claimed in claim 1, **characterized in that** the high-frequency difference component of the apparent perpendicular angle difference is ascertained by means of a high-pass filter.

**3.** The method as claimed in claim 1 or 2, **characterized in that** the translational control commands for translational movement of the simulator along the second vehicle axis is calculated from the product of the gravitational acceleration and the sine of the ascertained high-frequency difference component of the apparent perpendicular angle difference.

4. The method as claimed in any one of the preceding claims, **characterized in that** the compensation angle is calculated from the sum of the rotational angle and the high-frequency difference component of the apparent perpendicular angle difference minus the apparent perpendicular angle.

5. The method as claimed in any one of the preceding claims, **characterized in that** the rotational control commands for a rotational movement of the simulator about the first vehicle axis is calculated from the sum of the limited compensation angle and of the rotational angle.

6. The method as claimed in any one of the preceding claims, **characterized in that** the limited compensation angle is calculated by means of the physiological rotational rate limitation, depending on the compensation angle and the rotational rate that is provided from the movement model, wherein a restriction value for limiting the compensation angle is ascertained depending on a predetermined minimum restriction value and a high-frequency rotational rate component of the rotational rate.

7. A simulator for simulating translational and rotational movements of a vehicle, which comprises a platform that is movable in relation to a stationary reference plane by means of actuators, comprising a control unit that is configured to carry out the method as claimed in any one of claims 1 to 6 for the purposes of actuating the simulator.

8. The simulator as claimed in claim 7, **characterized in that** the simulator is a hexapod.

9. A computer program comprising program code means, configured to carry out the method as claimed in any one of claims 1 to 6 when the computer program is executed on a computer.

**Revendications**

1. Procédé de commande d'un simulateur pour la simulation de mouvements de translation et de rotation d'un véhicule, dans lequel, par rapport aux trois axes du véhicule, on fournit une vitesse de rotation autour d'un premier axe de véhicule et les forces spécifiques agissant respectivement selon un second et un troisième axe de véhicule à partir d'un modèle de mouvement simulant le véhicule et on les convertit en ordres de commande de translation et de rotation pour la commande du simulateur,
comprenant les étapes réalisées au moyen d'une unité de commande et consistant à :

   - calculer un angle de rotation ($\varphi_\omega$) à partir de la vitesse de rotation autour du premier axe de véhicule,

   **caractérisé par** les étapes consistant à :

   - calculer un angle d'aplomb apparent ($\varphi_f$) entre l'axe vertical en tant que troisième axe de véhicule et l'aplomb apparent des forces spécifiques, créé en raison des forces spécifiques agissant selon les second et troisième axes de véhicule,
   - calculer une différence d'angle d'aplomb apparent ($\Delta\varphi$) entre l'angle de rotation ($\varphi_\omega$) et l'angle d'aplomb apparent (cpf), et déterminer une composante de différence haute fréquence ($\varphi_{ypp}$) de la différence d'angle d'aplomb apparent ($\Delta\varphi_\omega$), composante qui doit être compensée par un mouvement de translation du simulateur, en fonction de la différence d'angle d'aplomb apparent,
   - calculer des ordres de commande de translation ($y_{pp,\ sim}$) pour piloter le simulateur en vue d'un mouvement de translation du simulateur selon le second axe de véhicule, en fonction de la composante d'angle de rotation haute fréquence déterminée ($\varphi_{ypp}$) de la différence d'angle d'aplomb apparent ($\Delta\varphi$),
   - calculer un angle de compensation ($\varphi_a$) correspondant à une valeur d'accélération à simuler selon le second axe de véhicule par inclinaison du simulateur par rapport à l'aplomb au sol, en fonction de l'angle de rotation ($\varphi_\omega$), de la composante de différence haute fréquence ($\varphi_{ypp}$) de la différence d'angle d'aplomb apparent ($\Delta\varphi$) et de l'angle d'aplomb apparent ($\varphi_f$),
   - calculer un angle de compensation limité ($\varphi_{a,\ lim}$) à partir de l'angle de compensation ($\varphi_a$) au moyen d'une limitation physiologique de la vitesse de rotation qui limite une inclinaison du simulateur en dessous du seuil de perception, et
   - calculer des ordres de commande de rotation ($\varphi_{sim}$) pour piloter le simulateur en vue d'un mouvement de rotation du simulateur autour du premier axe de véhicule, en fonction de l'angle de compensation limité ($\varphi_{a,\ lim}$)

et de l'angle de rotation ($\varphi_\omega$).

2. Procédé selon la revendication 1,
   **caractérisé en ce que** la composante de différence haute fréquence ($\varphi_{ypp}$) de la différence d'angle d'aplomb apparent ($\Delta\varphi$) est déterminée au moyen d'un filtre passe-haut.

3. Procédé selon la revendication 1 ou 2,
   **caractérisé en ce que** les ordres de commande de translation ($y_{pp,\,sim}$) en vue d'un mouvement de translation du simulateur selon le second axe de véhicule sont calculés à partir du produit de l'accélération due à la gravité (g) et du sinus de la composante de différence haute fréquence déterminée ($\varphi_{ypp}$) de la différence d'angle d'aplomb apparent ($\Delta\varphi$).

4. Procédé selon l'une des revendications précédentes,
   **caractérisé en ce que** l'angle de compensation ($\varphi_{a,\,lim}$) est calculé à partir de la somme de l'angle de rotation ($\varphi$ et de la composante haute fréquence ($\varphi_{ypp}$) de la différence d'angle d'aplomb apparent ($\Delta\varphi$), déduction faite de l'angle d'aplomb apparent ($\varphi_f$).

5. Procédé selon l'une des revendications précédentes,
   **caractérisé en ce que** les ordres de commande de rotation en vue d'un mouvement de rotation du simulateur autour du premier axe de véhicule sont calculés à partir de la somme de l'angle de compensation limité ($\varphi_{a,\,lim}$) et de l'angle de rotation ($\varphi_\omega$).

6. Procédé selon l'une des revendications précédentes,
   **caractérisé en ce que** l'angle de compensation limité ($\varphi_{a,\,lim}$) est calculé au moyen de la limitation physiologique de la vitesse de rotation, en fonction de l'angle de compensation ($\varphi_a$) et de la vitesse de rotation fournie par le modèle de mouvement, une valeur limite pour limiter l'angle de compensation ($\varphi_a$) étant déterminée en fonction d'une valeur limite minimale prédéterminée et d'une composante haute fréquence de la vitesse de rotation.

7. Simulateur pour simuler un mouvement de translation et de rotation d'un véhicule, qui présente une plate-forme mobile par rapport à un plan de référence fixe au moyen d'actionneurs, comportant une unité de commande qui est conçue pour mettre en œuvre le procédé de commande du simulateur selon l'une des revendications 1 à 6.

8. Simulateur selon la revendication 7,
   **caractérisé en ce que** le simulateur est un hexapode.

9. Programme informatique comprenant des moyens de code de programme conçus pour mettre en œuvre le procédé selon l'une des revendications 1 à 6, lorsque le programme informatique est exécuté sur une machine de calcul.

Figur 1 (Stand der Technik)

Figur 2

EP 3 259 039 B1

Figur 3

EP 3 259 039 B1

Figur 4

Simulatorkabine

Luftfahrzeugkabine

Luftfahrzeug

**Fall 1: Geradeausflug mit konstantem Rollwinkel**
**- Filtereingangssignal -**

Figur 5a

EP 3 259 039 B1

**Fall 1: Geradeausflug mit konstantem Rollwinkel**
**- Filterausgangssignal -**

Figur 5b

**Fall 1: Geradeausflug mit konstantem Rollwinkel**
**- translatorische Filterantwort -**

Figur 5c

Fall 1: Geradeausflug mit konstantem Rollwinkel
- rotatorische Filterantwort -

Figur 5d

EP 3 259 039 B1

| Luftfahrzeug | Luftfahrzeugkabine | Simulatorkabine |
|:---:|:---:|:---:|
| | | |

EP 3 259 039 B1

# Figur 6

Figur 7a

Figur 7b

Figur 7c

EP 3 259 039 B1

Fall 2: Kurve am Boden - Rotatorische Filterantwort

Figur 7d

| Luftfahrzeug | Luftfahrzeugkabine | Simulatorkabine |
|---|---|---|

Figur 8

EP 3 259 039 B1

Fall 3: Koordinierte Kurve - Filtereingangssignale

Figur 9a

EP 3 259 039 B1

Figur 9b

Figur 9c

Figur 9d

EP 3 259 039 B1

**IN DER BESCHREIBUNG AUFGEFÜHRTE DOKUMENTE**

**In der Beschreibung aufgeführte Patentdokumente**

- DE 102011103736 A1
- WO 2007042290 A1